# EUROPEAN PATENT SPECIFICATION

(11) **EP 3 451 581 B1**
(45) Date of publication and mention of the grant of the patent: **05.08.2020**
(21) Application number: 16905038.2
(22) Date of filing: 16.06.2016
(51) Int. Cl.: H04L 12/10

(54) **SWITCHING DEVICE**
SCHALTVORRICHTUNG
DISPOSITIF DE COMMUTATION

(43) Date of publication of application: 06.03.2019
(73) Proprietor: Huawei Technologies Co., Ltd., Longgang District Shenzhen, Guangdong 518129 (CN)
(72) Inventor: ZHANG, Qiang, Shenzhen Guangdong 518129 (CN); JIA, Xin, Shenzhen Guangdong 518129 (CN)
(74) Representative: Körber, Martin Hans
(86) International application number: PCT/CN2016/085981
(87) International publication number: WO 2017/214922

(56) References cited:
- EP-A1- 2 835 934
- WO-A1-2012/117371
- CN-A- 103 534 657
- CN-A- 104 041 001
- CN-A- 105 227 326
- US-A1- 2011 119 506
- US-A1- 2013 031 383
- US-B1- 8 601 289

## Description

### TECHNICAL FIELD

Embodiments of the present invention relate to the communications field, and in particular, to a switching device in the communications field.

### BACKGROUND

In a service upgrade process of a wired network, a plain old telephone service (POTS) and an asymmetric digital subscriber line (ADSL service that are provided by an office equipment need to be upgraded to a very-high-data-rate digital subscriber line (VDSL) service or a next-generation digital subscriber line (G.fast) service providing a total access rate of 1 Gbps in uplink and downlink within a 100-meter copper cable distance, and a reverse power supply equipment (PSE) of a user house needs to provide a direct current to the VDSL service or the G.fast service. When the reverse PSE supplies power to the VDSL service or the G.fast service, the direct current provided by the reverse PSE conflicts with a POTS direct current of the office equipment. Consequently, an abnormal power supply is caused. To resolve the problem that the direct current provided by the reverse PSE of the user house conflicts with the POTS direct current, an engineer needs to disconnect the office equipment from a terminal device, and connect an outdoor integrated device to the terminal device. In this case, a time at which the engineer arrives on site and a time of a user need to be coordinated. Consequently, customer satisfaction degrades, engineering is highly complex, and human costs are high.
EP 2 835 934 A1 discloses a system for use in combination with a remote node powered by a first number of lines, each line thereof being capable of providing power to the remote node in an active state of the line and not being capable of providing power to the remote node in a non-active state of the line; said system comprising: a second number of convertors; and a power control part configured for controlling the power provided by each line of said first number of lines to a converter of said second number of converters, in function of the time, depending of the states of the first number of lines.

### SUMMARY

Embodiments of the present invention provide a switching device, to implement automatic switching, reduce engineering complexity, and reduce human costs.

According to a first aspect, a switching device is provided. The switching device includes: a reverse voltage conduction module, configured to conduct a first voltage provided by a terminal device; and a switching circuit, configured to switch, by using the first voltage conducted by the reverse voltage conduction module, a device connected to the terminal device from a source device to a target device, so that the terminal device reversely supplies power to the target device, where the source device forward supplies power to the terminal device before the switching circuit switches the device connected to the terminal device from the source device to the target device, an output end of the reverse voltage conduction module is connected to an input end of the switching circuit, and an output end of the switching circuit is connected to the input end of the target device.

In this way, after the reverse voltage conduction module conducts the first voltage, the switching circuit switches, based on the first voltage, the terminal device from being connected to the source device to being connected to the target device, so that automatic switching from the source device to the target device can be implemented, engineering complexity can be reduced, and human costs can be reduced.

Optionally, the first voltage may be provided from a user house for the target device. The source device may be an office equipment. The target device may be an outdoor integrated device. The reverse voltage conduction module may receive the first voltage provided from the user house. Then the switching circuit switches the office equipment to the outdoor integrated device based on the first voltage. The office equipment supports a POTS and an ADSL service. The outdoor integrated device supports a VDSL service or a G.fast service. In this way, during upgrading of the POTS and the ADSL service, manual switching is avoided and human costs are reduced.

In a first possible implementation of the first aspect, the switching device further includes a reverse power supply conversion module, connected between the target device and the reverse voltage conduction module, and configured to convert, after the reverse voltage conduction module conducts the first voltage, the first voltage into a second voltage required by the target device.

Specifically, after the reverse voltage conduction module conducts the first voltage, the first voltage may not be a voltage required by the target device. Therefore, the reverse power supply conversion module needs to convert the first voltage into the second voltage required by the target device. For example, the reverse power supply conversion module may convert the first voltage with a large voltage value into the second voltage with a relatively small voltage value.

With reference to the foregoing possible implementation of the first aspect, in a second possible implementation of the first aspect, the reverse power supply conversion module is connected between the switching circuit and the reverse voltage conduction module, and the second voltage supplies electrical energy to the switching circuit.

With reference to the foregoing possible implementations of the first aspect, in a third possible implementation of the first aspect, the reverse power supply conversion module is connected between the switching circuit and the target device, and the first voltage supplies electrical energy to the switching circuit.

In this embodiment of the present invention, the electrical energy of the switching circuit may be the first voltage before the reverse power supply conversion module performs conversion, or may be the second voltage obtained after the reverse power supply conversion module performs conversion. The electrical energy is supplied to the switching circuit based on a connection relationship of the reverse power supply conversion module. When the reverse power supply conversion module is connected between the reverse voltage conduction module and the switching circuit, the electrical energy of the switching circuit is supplied by the second voltage obtained after the reverse power supply conversion module performs conversion, and the second voltage also supplies electrical energy to the target device. When the reverse power supply conversion module is connected between the switching circuit and the target device, the electrical energy of the switching circuit is supplied by the first voltage before the reverse power supply conversion module performs conversion, and the second voltage supplies electrical energy to the target device.

With reference to the foregoing possible implementations of the first aspect, in a fourth possible implementation of the first aspect, the switching circuit includes: a switching controller, configured to: when the reverse voltage conduction module conducts the first voltage, control a relay to switch the source device connected to the terminal device to the target device; and the relay, configured to switch, under control of the switching controller, the source device connected to the terminal device to the target device, where the output end of the reverse voltage conduction module is connected to an input end of the switching controller, an output end of the switching controller is connected to an input end of the relay, and an output end of the relay is connected to the target device.

With reference to the foregoing possible implementations of the first aspect, in a fifth possible implementation of the first aspect, the switching device further includes: a diode group, connected to the source device by using a first terminal and a second terminal, connected to the switching circuit by using a third terminal and a fourth terminal, and configured to enable a polarity of a third voltage from the first terminal to the second terminal that is output by the source device to be a first polarity.

In this embodiment of the present invention, because the polarity of the third voltage from the first terminal to the second terminal that is output by the source device is unclear, the diode group needs to be used to determine the polarity of the third voltage from the first terminal to the second terminal. A polarity of the first voltage may be opposite to the polarity of the third voltage. In this way, the reverse voltage conduction module may conduct only the first voltage without conducting the third voltage, so that the first voltage supplies electrical energy to the switching circuit.

With reference to the foregoing possible implementations of the first aspect, in a sixth possible implementation of the first aspect, the diode group includes: a first diode, where a positive electrode of the first diode is connected to the source device by using the first terminal, and a negative electrode of the first diode is connected to the switching circuit by using the third terminal, configured to conduct the positive third voltage that is from the first terminal to the second terminal; and a second diode, where a negative electrode of the second diode is connected to the source device by using the second terminal, and a positive electrode of the second diode is connected to the switching circuit by using the fourth terminal, configured to conduct the positive third voltage that is from the first terminal to the second terminal.

In this embodiment of the present invention, when the third voltage from the first terminal to the second terminal is a positive voltage, the positive electrode of the first diode is connected to the source device by using the first terminal, and the negative electrode of the second diode is connected to the source device by using the second terminal. In this way, after the third voltage that is output by the source device passes through the first diode and the second diode, a voltage from the third terminal to the fourth terminal is the determined positive third voltage, and a second polarity of the first voltage may be negative. In this way, the reverse voltage conduction module conducts only the reverse first voltage.

With reference to the foregoing possible implementations of the first aspect, in a seventh possible implementation of the first aspect, the diode group further includes: a third diode, where a negative electrode of the third diode is connected to the source device by using the first terminal, and a positive electrode of the third diode is connected to the switching circuit by using the fourth terminal, configured to conduct the reverse third voltage that is from the first terminal to the second terminal; and a fourth diode, where a positive electrode of the fourth diode is connected to the source device by using the second terminal, and a negative electrode of the fourth diode is connected to the switching circuit by using the third terminal, configured to conduct the reverse third voltage that is from the first terminal to the second terminal.

In this embodiment of the present invention, regardless of whether the positive third voltage or the reverse third voltage from the first terminal to the second terminal is output by the source device, the positive third voltage can be output from the third terminal to the fourth terminal after passing through the first diode, the second diode, the third diode, and the fourth diode. The negative electrode of the third diode is connected to the source device by using the first terminal. The positive electrode of the third diode is connected to the switching circuit by using the fourth terminal. The positive electrode of the fourth diode is connected to the source device by using the second terminal. The negative electrode of the fourth diode is connected to the switching circuit by using the third terminal. When the voltage from the first terminal to the second terminal is the reverse third voltage, it can also be ensured that the positive third voltage is output from the third terminal to the fourth terminal. The polarity of the first voltage may be opposite to the polarity of the third voltage. Therefore, the second polarity of the first voltage may be negative. In this way, the reverse voltage conduction module can conduct the reverse first voltage.

With reference to the foregoing possible implementations of the first aspect, in an eighth possible implementation of the first aspect, the negative electrode of the first diode is connected to the source device by using the first terminal, and the positive electrode of the first diode is connected to the switching circuit by using the third terminal, the first diode is configured to conduct the reverse third voltage that is from the first terminal to the second terminal; and the positive electrode of the second diode is connected to the source device by using the second terminal, and the negative electrode of the second diode is connected to the switching circuit by using the fourth terminal, the first diode is configured to conduct the reverse third voltage that is from the first terminal to the second terminal.

In this embodiment of the present invention, when a voltage from the first terminal to the second terminal that is output by the source device is the reverse third voltage, the negative electrode of the first diode is connected to the source device by using the first terminal, and the positive electrode of the second diode is connected to the source device by using the second terminal. In this way, after the third voltage that is output by the source device passes through the first diode and the second diode, a voltage from the third terminal to the fourth terminal is the determined reverse third voltage, and the second polarity of the first voltage may be a positive voltage. In this way, the reverse voltage conduction module conducts only the positive first voltage.

With reference to the foregoing possible implementations of the first aspect, in a ninth possible implementation of the first aspect, the positive electrode of the third diode is connected to the source device by using the first terminal, and the negative electrode of the third diode is connected to the switching circuit by using the fourth terminal, configured to conduct the positive third voltage that is from the first terminal to the second terminal; and the negative electrode of the fourth diode is connected to the source device by using the second terminal, and the positive electrode of the fourth diode is connected to the switching circuit by using the third terminal, configured to conduct the positive third voltage that is from the first terminal to the second terminal.

In this embodiment of the present invention, regardless of whether the positive third voltage or the reverse third voltage from the first terminal to the second terminal is output by the source device, the reverse third voltage can be output from the third terminal to the fourth terminal after passing through the first diode, the second diode, the third diode, and the fourth diode. The positive electrode of the third diode is connected to the source device by using the first terminal. The negative electrode of the third diode is connected to the switching circuit by using the fourth terminal. The negative electrode of the fourth diode is connected to the source device by using the second terminal. The positive electrode of the fourth diode is connected to the switching circuit by using the third terminal. When the voltage from the first terminal to the second terminal is the positive third voltage, it can also be ensured that the reverse third voltage is output from the third terminal to the fourth terminal. Therefore, the second polarity of the first voltage may be a positive voltage. In this way, the reverse voltage conduction module can conduct only the positive first voltage.

With reference to the foregoing possible implementations of the first aspect, in a tenth possible implementation of the first aspect, the source device supports a plain old telephone service POTS and an asymmetric digital subscriber line ADSL service, and the switching device further includes: a first low-pass filter, connected between the diode group and the source device, and configured to conduct a signal of the POTS; and a high-pass filter, connected between the source device and the switching circuit, and configured to conduct the asymmetric digital subscriber line ADSL service.

In this embodiment of the present invention, the high-pass filter is directly connected between the source device and the switching circuit. The source device supports the POTS and the ADSL service, the POTS belongs to a low-frequency direct current signal, the ADSL service belongs to a high-frequency alternating current signal, and the POTS can provide a direct current voltage for the terminal device. Therefore, the POTS needs to be separated from the ADSL service by using the high-pass filter and the first low-pass filter, to prevent the diode group from affecting an ADSL alternating current signal.

Optionally, when the source device supports only the POTS, the switching device may not include the first low-pass filter and the high-pass filter. In other words, the first low-pass filter in this embodiment of the present invention is intended to separate the POTS from the ADSL service. When the source device supports only the POTS, the first low-pass filter and the high-pass filter may not be needed.

With reference to the foregoing possible implementations of the first aspect, in an eleventh possible implementation of the first aspect, the switching device further includes: a matched load, connected between the diode group and the switching circuit, and configured to adjust a ringing signal of the POTS before the reverse voltage conduction module conducts the first voltage.

Specifically, the diode group affects the ringing signal of the POTS. Therefore, to enable the source device to normally communicate with the terminal device, the matched load is required for balancing, to further ensure stability of the signal.

With reference to the foregoing possible implementations of the first aspect, in a twelfth possible implementation of the first aspect, the switching device further includes a reverse power supply module, and the reverse power supply module is connected to the reverse voltage conduction module by using a fifth terminal and a sixth terminal; the reverse power supply module is configured to: enable a polarity of the first voltage from the fifth terminal to the sixth terminal to be a second polarity, and output the first voltage of the second polarity to the reverse voltage conduction module, where the second polarity is opposite to the first polarity; and the reverse voltage conduction module is further configured to receive the second voltage of the first polarity before conducting the first voltage.

In this embodiment of the present invention, the switching device includes the reverse power supply module. The reverse power supply module is configured to output the first voltage of the second polarity. The second polarity is opposite to the first polarity of the third voltage. In this way, the reverse voltage conduction module may conduct only the first voltage of the second polarity.

With reference to the foregoing possible implementations of the first aspect, in a thirteenth possible implementation of the first aspect, the reverse voltage conduction module includes a fifth diode; and when the second polarity is negative, the fifth diode is configured to reversely conduct the first voltage, a negative electrode of the fifth diode is connected to the reverse power supply module by using the fifth terminal, and a positive electrode of the fifth diode is connected to the switching circuit; or when the second polarity is positive, the fifth diode is configured to forward conduct the first voltage, a positive electrode of the fifth diode is connected to the reverse power supply module by using the fifth terminal, and a negative electrode of the fifth diode is connected to the switching circuit.

Specifically, the fifth diode included in the reverse voltage conduction module determines a conduction direction based on the second polarity of the first voltage. When the second polarity is positive, the fifth diode is configured to forward conduct the first voltage. When the second polarity is negative, the fifth diode is configured to reversely conduct the first voltage.

With reference to the foregoing possible implementations of the first aspect, in a fourteenth possible implementation of the first aspect, the reverse voltage conduction module further includes a sixth diode; and when the second polarity is negative, the sixth diode is configured to forward conduct the first voltage, a positive electrode of the sixth diode is connected to the reverse power supply module by using the sixth terminal, and a negative electrode of the sixth diode is connected to the switching circuit; or when the second polarity is positive, the sixth diode is configured to reversely conduct the first voltage, a negative electrode of the sixth diode is connected to the reverse power supply module by using the sixth terminal, and a positive electrode of the sixth diode is connected to the switching circuit.

In this embodiment of the present invention, the sixth diode included in the reverse voltage conduction module can further ensure that the first voltage of the second polarity can be conducted. For example, when the fifth diode is broken down, the sixth diode may be used to conduct the first voltage of the second polarity.

With reference to the foregoing possible implementations of the first aspect, in a fifteenth possible implementation of the first aspect, the reverse power supply module includes: a voltage/current detector, configured to: detect the first polarity of the third voltage that is from the fifth terminal to the sixth terminal, and send the first polarity to a first voltage output controller; and the first voltage output controller, configured to: receive the first polarity, and control outputting of the first voltage of the second polarity based on the first polarity.

In this embodiment of the present invention, when the voltage/current detector detects that the first polarity is positive, the first voltage output controller controls outputting of the negative first voltage. When the voltage/current detector detects that the first polarity is negative, the first voltage output controller controls outputting of the positive first voltage.

With reference to the foregoing possible implementations of the first aspect, in a sixteenth possible implementation of the first aspect, the first voltage output controller is specifically configured to output a pulse sequence when a voltage value of the third voltage is zero; the voltage/current detector is further configured to detect a polarity of the pulse sequence; the reverse voltage conduction module is configured to conduct the pulse sequence; and the first voltage output controller is further configured to: when the reverse voltage conduction module conducts the pulse sequence, enable the polarity of the pulse sequence to be the second polarity.

In this embodiment of the present invention, when the voltage value of the third voltage is zero, the first voltage output controller controls outputting of the pulse sequence. When the reverse voltage conduction module conducts the pulse sequence, the voltage/current detector is configured to: detect the polarity of the pulse sequence, send the polarity of the pulse sequence to the first voltage output controller, and determine that the polarity of the pulse sequence is the second polarity.

With reference to the foregoing possible implementations of the first aspect, in a seventeenth possible implementation of the first aspect, the reverse power supply module further includes a first connector, a second connector, a third connector, and a reverse power supply, where the first connector is connected between the reverse power supply and the third connector, the third connector is connected between the first connector and the reverse voltage conduction module, the second connector is connected to the reverse power supply, and a connection direction of the first connector is opposite to a connection direction of the second connector; and when the first polarity is the same as the second polarity, the first connector is disconnected from the third connector, and the second connector is connected to the third connector.

Further, the reverse power supply module may further include an indicator. If the indicator is normal, and the reverse power supply module outputs the first voltage, it indicates that the first connector is normally connected to the third connector. When the indicator is abnormal, it indicates that the first connector is abnormally connected to the third connector. Therefore, a user needs to manually disconnect the first connector from the third connector, and manually connect the second connector to the second connector.

With reference to the foregoing possible implementations of the first aspect, in an eighteenth possible implementation of the first aspect, a difference between a voltage value of the first voltage and a voltage value of the third voltage is greater than a preset threshold, and the voltage value of the first voltage is greater than the voltage value of the third voltage.

In this embodiment of the present invention, the first voltage may be conducted by using magnitude of the voltage value. To be specific, when the first voltage is a high voltage and the third voltage is a low voltage, the reverse voltage conduction module can conduct the first voltage.

With reference to the foregoing possible implementation of the first aspect, in a nineteenth possible implementation of the first aspect, the switching device further includes a second voltage output controller, where an output end of the second voltage output controller is connected to the reverse voltage conduction module, to control outputting of the first voltage; the reverse voltage conduction module further includes: a high-voltage conductor, connected between the second voltage output controller and the switching circuit, and configured to conduct the first voltage; and a voltage converter, connected between the high-voltage conductor and the switching circuit, and configured to: after the high-voltage conductor conducts the first voltage, perform step-down conversion processing on the first voltage to obtain a step-down first voltage; and the switching circuit is specifically configured to switch the source device to the target device by using the step-down first voltage.

In this embodiment of the present invention, the switching device may further include the second voltage output controller, configured to control outputting of the first voltage with a first voltage value. The voltage value of the third voltage is a second voltage value. A result obtained by subtracting the second voltage value from the first voltage value is greater than the preset threshold. In this way, the high-voltage conductor can conduct the first voltage with the first voltage value. The voltage converter performs step-down conversion on the first voltage with the first voltage value. The step-down first voltage supplies electrical energy to the switching circuit to switch the source device to the target device.

With reference to the foregoing possible implementations of the first aspect, in a twentieth possible implementation of the first aspect, the switching device further includes a second low-pass filter, connected between the reverse voltage conduction module and the reverse power supply module, and configured to block at least one of the ADSL service, a very-high-data-rate digital subscriber line VDSL service, and a G.fast service.

In this embodiment of the present invention, to prevent the switching device from affecting a normal ADSL service, very-high-data-rate digital subscriber line VDSL service, and G.fast service, the second low-pass filter is added to block the ADSL service, the very-high-data-rate digital subscriber line VDSL service, and the G.fast service, thereby preventing the reverse voltage conduction module from affecting the ADSL service, the very-high-data-rate digital subscriber line VDSL service, and the G.fast service.

With reference to the foregoing possible implementations of the first aspect, in a twenty-first possible implementation of the first aspect, the switching device further includes a third low-pass filter, connected between the reverse power supply conversion module and the switching circuit, and configured to block the ADSL service, the very-high-data-rate digital subscriber line VDSL service, and the G.fast service after the first voltage is conducted, to prevent the reverse power supply conversion module from affecting the normal ADSL service, very-high-data-rate digital subscriber line VDSL service, and G.fast service.

With reference to the foregoing possible implementations of the first aspect, in a twenty-second possible implementation of the first aspect, the switching device further includes a fourth low-pass filter, connected between the reverse voltage conduction module and the voltage/current detector, and configured to block the ADSL service, the very-high-data-rate digital subscriber line VDSL service, and the G.fast service, to prevent the voltage/current detector and the second voltage output controller from affecting the ADSL service, the very-high-data-rate digital subscriber line VDSL service, and the G.fast service.

According to a second aspect, a reverse power supply equipment is provided. The reverse power supply equipment includes a voltage/current detector and a first voltage output controller. The voltage/current detector is configured to: detect a first polarity of a third voltage, and output the first polarity to the first voltage output controller. The third voltage corresponds to a first service. The first voltage output controller is configured to: receive the first polarity that is input by the voltage/current detector, and control outputting of the first voltage of a second polarity based on the first polarity, so that a switching circuit switches, based on the first voltage of the second polarity, a source device connected to a terminal device to a target device. The first polarity is opposite to the second polarity.

In a first possible implementation of the second aspect, the first voltage output controller is specifically configured to: when the first polarity is negative, control outputting of the positive first voltage, or when the first polarity is positive, control outputting of the negative first voltage.

With reference to the foregoing possible implementation of the second aspect, in a second possible implementation of the second aspect, the first voltage output controller is specifically configured to control outputting of a pulse sequence when a voltage value of the third voltage is zero, and the voltage/current detector is specifically configured to: detect a polarity of the pulse sequence, and when a power supply conduction device conducts the pulse sequence, determine that the polarity of the pulse sequence is a polarity of the third voltage.

With reference to the foregoing possible implementations of the second aspect, in a third possible implementation of the second aspect, the first service is a plain old telephone service POTS.

With reference to the foregoing possible implementations of the second aspect, in a fourth possible implementation of the second aspect, the reverse power supply equipment further includes: a fourth low-pass filter, connected between a reverse voltage conduction module and the voltage/current detector, and configured to block at least one of an ADSL service, a very-high-data-rate digital subscriber line VDSL service, and a G.fast service, where the low-pass filter is the fourth low-pass filter in the first aspect.

According to a third aspect, a reverse power supply equipment is provided. The reverse power supply equipment includes a first connector, a second connector, a third connector, and a reverse power supply. The first connector is connected between the reverse power supply and the third connector. The third connector is connected between the first connector and a reverse voltage conduction module. The second connector is connected to the reverse power supply. A connection direction of the first connector is opposite to a connection direction of the second connector. When a first polarity is the same as a second polarity, the first connector is disconnected from the third connector, and the second connector is connected to the third connector.

According to a fourth aspect, a reverse power supply equipment is provided. The reverse power supply equipment includes a second voltage output controller. An output end of the second voltage output controller is connected to a reverse voltage conduction module in a switching device, to control outputting of a first voltage. A difference between a voltage value of the first voltage and a voltage value of a third voltage that is output by a source device is greater than a preset threshold. The voltage value of the first voltage is greater than the voltage value of the third voltage.

According to a fifth aspect, a switching device is provided. The switching device includes a high-voltage conductor, a voltage converter, and a switching circuit. The high-voltage conductor is connected between a second voltage output controller and the switching circuit, and configured to conduct a first voltage. The voltage converter is connected between the high-voltage conductor and the switching circuit, and configured to perform, after the high-voltage conductor conducts the first voltage, step-down conversion processing on the first voltage to obtain a step-down first voltage. The switching circuit is connected between a target device and the voltage converter, and configured to switch a source device to the target device by using the step-down first voltage.

### BRIEF DESCRIPTION OF DRAWINGS

To describe the technical solutions in the embodiments of the present invention more clearly, the following briefly describes the accompanying drawings required for describing the embodiments of the present invention or the prior art. Apparently, the accompanying drawings in the following description show some embodiments of the present invention, and a person of ordinary skill in the art may derive other drawings from these accompanying drawings without creative efforts.
FIG. 1 is a schematic block diagram of an application scenario according to an embodiment of the present invention;
FIG. 2 is a schematic block diagram of a switching device according to an embodiment of the present invention;
FIG. 3 is a schematic block diagram of a reverse power supply equipment according to an embodiment of the present invention;
FIG. 4 is a schematic block diagram of another reverse power supply equipment according to an embodiment of the present invention;
FIG. 5 is a schematic block diagram of another reverse power supply equipment according to an embodiment of the present invention;
FIG. 6 is a schematic block diagram of another switching device according to an embodiment of the present invention;
FIG. 7 is a schematic block diagram of still another switching device according to an embodiment of the present invention;
FIG. 8 is a schematic block diagram of still another switching device according to an embodiment of the present invention;
FIG. 9 is a schematic block diagram of still another switching device according to an embodiment of the present invention;
FIG. 10 is a schematic block diagram of still another switching device according to an embodiment of the present invention;
FIG. 11 is a schematic block diagram of still another switching device according to an embodiment of the present invention;
FIG. 12 is a schematic block diagram of still another switching device according to an embodiment of the present invention; and
FIG. 13 is a schematic block diagram of still another switching device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

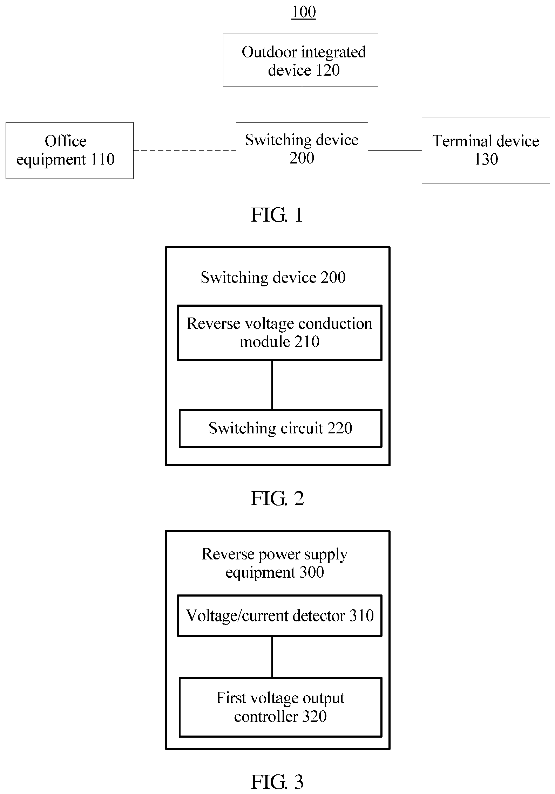

A POTS and an ADSL service are upgraded to a VDSL service, or a POTS and an ADSL service are upgraded to a G.fast service. A source device supports the POTS and the ADSL service. A target device supports the VDSL service and the G.fast service. As shown in FIG. 1, before the upgrading, an office equipment 110 performs data communication with a terminal device 130. After the upgrading, an outdoor integrated device 120 performs data communication with the terminal device 130. Before the upgrading, the terminal device supports the POTS and the ADSL service. After the upgrading, the terminal device is also upgraded to a terminal device of the VDSL service or the G.fast service that supports a POTS voice. Optionally, for example, the outdoor integrated device 120 may be a distribution point unit (DPU) in a wired network. To be specific, the office equipment supports the POTS and the ADSL service. The outdoor integrated device 120 supports the VDSL service or the G.fast service. After the upgrading, the terminal device 130 needs to reversely supplies power to the outdoor integrated device 120. Therefore, a switching device 200 needs to switch the office equipment 110 connected to the terminal device 130 to the outdoor integrated device 120. In the embodiments of the present invention, the switching device 200 is mainly described.

FIG. 2 shows a switching device 200 according to an embodiment of the present invention. The switching device 200 includes:
a reverse voltage conduction module 210, configured to conduct a first voltage provided by a terminal device; and
a switching circuit 220, configured to switch, by using the first voltage conducted by the reverse voltage conduction module, a device connected to the terminal device from a source device to a target device, so that the terminal device reversely supplies power to the target device, where the source device forward supplies power to the terminal device before the switching circuit 220 switches the device connected to the terminal device from the source device to the target device.

An output end of the reverse voltage conduction module is connected to an input end of the switching circuit. An output end of the switching circuit is connected to an input end of the target device.

It should be understood that in this embodiment of the present invention, supplying power forward may be that the source device supplies power to the terminal device, and supplying power reversely may be that the terminal device supplies power to the target device. For example, in FIG. 1, the office equipment 110 forward supplies power to the terminal device 130, and the terminal device 130 reversely supplies power to the outdoor integrated device 120.

In this way, after the reverse voltage conduction module conducts the first voltage, the switching circuit switches, based on the first voltage, the source device connected to the terminal device to the target device, so that automatic switching from the source device to the target device can be implemented, engineering complexity can be reduced, and human costs can be reduced.

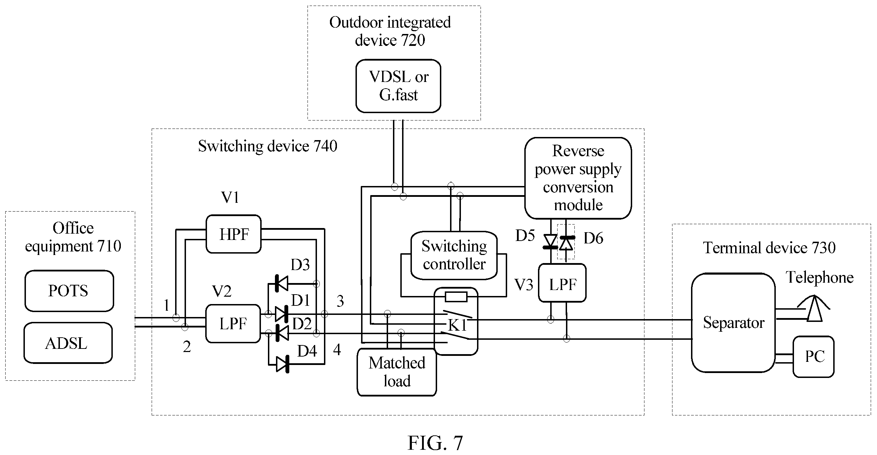

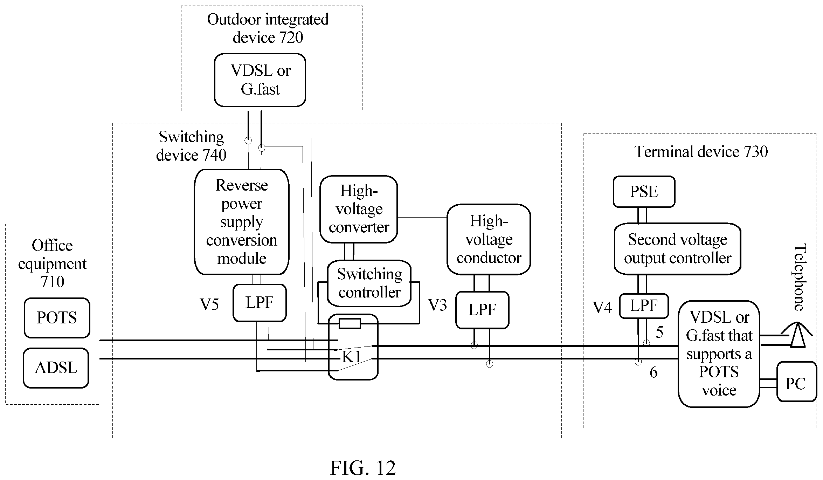

For example, the reverse voltage conduction module 210 may be a fifth diode D5 in FIG. 7 to FIG. 11 and FIG. 13, or may be a sixth diode D6 in FIG. 7 to FIG. 11 and FIG. 13, or may be a fifth diode D5 and a sixth diode D6 in FIG. 7 to FIG. 11 and FIG. 13, or may be a high-voltage conductor in FIG. 12, or the like. This embodiment of the present invention is not limited thereto.

For another example, the switching circuit 220 may be a switching controller and a relay K1 in FIG. 7 to FIG. 13.

Optionally, the first voltage may be a reverse voltage provided from a user house for the target device. The source device may be an office equipment. The target device may be an outdoor integrated device. The reverse voltage conduction module may receive the first voltage provided from the user house. Then the switching circuit switches the office equipment to the outdoor integrated device based on the first voltage. The office equipment supports a POTS and an ADSL service. The outdoor integrated device supports a VDSL service or a G.fast service. In this way, during upgrading of the POTS and the ADSL service, manual switching is avoided and human costs are reduced.

In this embodiment of the present invention, that the office equipment supports the POTS and the ADSL service is for ease of description. Certainly, the office equipment may alternatively support only the POTS. This is not limited in this embodiment of the present invention.

Optionally, the switching device 200 further includes: a reverse power supply conversion module, connected between the target device and the reverse voltage conduction module, and configured to convert, after the reverse voltage conduction module conducts the first voltage, the first voltage into a second voltage required by the target device.

Specifically, after the reverse voltage conduction module conducts the first voltage, the first voltage may not be a voltage required by the target device. Therefore, the reverse power supply conversion module needs to convert the first voltage into the second voltage required by the target device. For example, the reverse power supply conversion module may convert the first voltage with a large voltage value into the second voltage with a relatively small voltage value. For example, the reverse power supply conversion module may be a reverse power supply conversion module in FIG. 7 to FIG. 13.

Optionally, the reverse power supply conversion module is connected between the switching circuit and the reverse voltage conduction module. The second voltage supplies electrical energy to the switching circuit. For example, the reverse power supply conversion module may be a reverse power supply conversion module in FIG. 7 to FIG. 10 and FIG. 13.

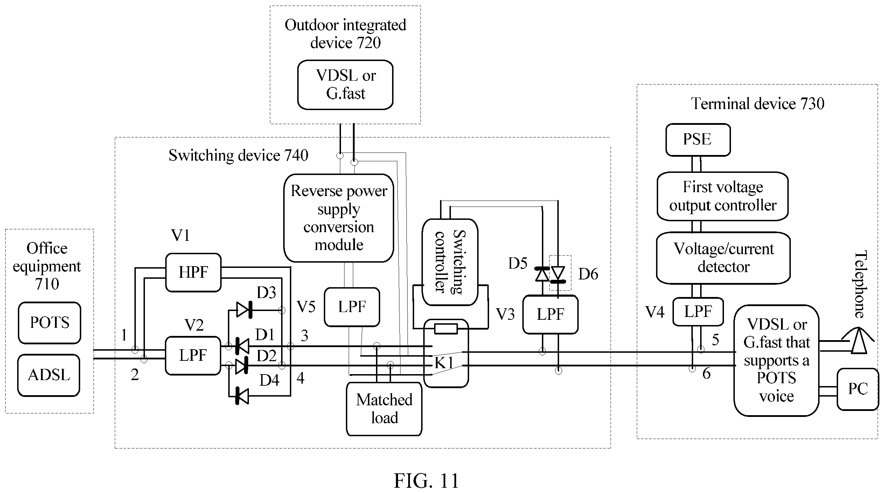

Optionally, the reverse power supply conversion module is connected between the switching circuit and the target device. The first voltage supplies electrical energy to the switching circuit. For example, the reverse power supply conversion module may be a reverse power supply conversion module in FIG. 11 and FIG. 12.

Specifically, the electrical energy of the switching circuit may be the first voltage before the reverse power supply conversion module performs conversion, or may be the second voltage obtained after the reverse power supply conversion module performs conversion. The electrical energy is supplied to the switching circuit based on a connection relationship of the reverse power supply conversion module. When the reverse power supply conversion module is connected between the reverse voltage conduction module and the switching circuit, the electrical energy of the switching circuit is supplied by the second voltage obtained after the reverse power supply conversion module performs conversion, and the second voltage also supplies electrical energy to the target device. When the reverse power supply conversion module is connected between the switching circuit and the target device, the electrical energy of the switching circuit is supplied by the first voltage before the reverse power supply conversion module performs conversion, and the second voltage supplies electrical energy to the target device.

Optionally, the switching circuit includes: a switching controller, configured to: when the reverse voltage conduction module conducts the first voltage, control a relay to switch the source device connected to the terminal device to the target device; and the relay, configured to switch, under control of the switching controller, the source device connected to the terminal device to the target device. The output end of the reverse voltage conduction module is connected to an input end of the switching controller. An output end of the switching controller is connected to an input end of the relay. An output end of the relay is connected to the target device. The switching controller may be the switching controller in FIG. 7 to FIG. 13. The relay may be the relay K1 in FIG. 7 to FIG. 13.

Optionally, the switching device 200 further includes: a diode group, connected to the source device by using a first terminal and a second terminal, connected to the switching circuit by using a third terminal and a fourth terminal, and configured to enable a polarity of a third voltage from the first terminal to the second terminal that is output by the source device to be a first polarity. For example, the diode group may be a diode group that includes a first diode D1, a second diode D2, a third diode D3, and a fourth diode D4 in FIG. 7 to FIG. 11 and FIG. 13, or may be a diode group that includes only a first diode D1 and a second diode D2 in FIG. 7 to FIG. 11 and FIG. 13. This is not limited in this embodiment of the present invention.

Specifically, because the polarity of the third voltage from the first terminal to the second terminal that is output by the source device is unclear, the diode group needs to be used to determine the polarity of the third voltage from the first terminal to the second terminal. A polarity of the first voltage may be opposite to the polarity of the third voltage. In this way, the reverse voltage conduction module may conduct only the first voltage without conducting the third voltage, so that the first voltage supplies electrical energy to the switching circuit.

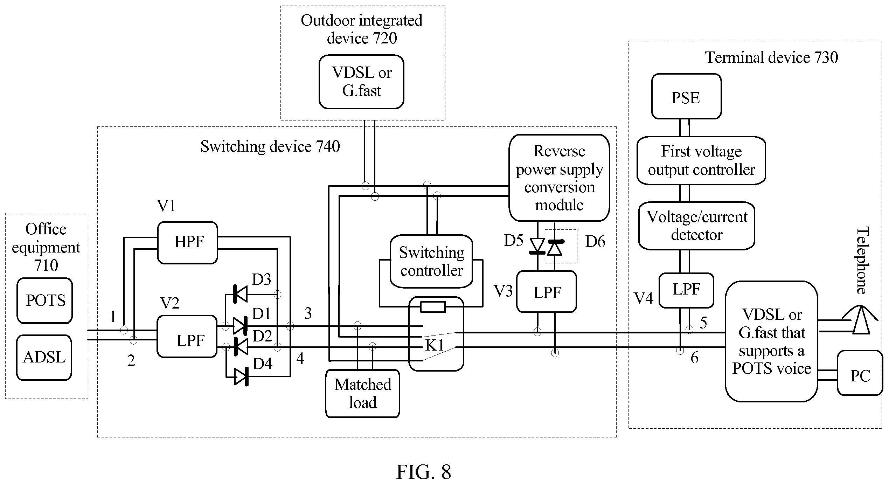

Optionally, the diode group includes: a first diode, where a positive electrode of the first diode is connected to the source device by using the first terminal, and a negative electrode of the first diode is connected to the switching circuit by using the third terminal, configured to conduct the positive third voltage that is from the first terminal to the second terminal; and a second diode, where a negative electrode of the second diode is connected to the source device by using the second terminal, and a positive electrode of the second diode is connected to the switching circuit by using the fourth terminal, configured to conduct the positive third voltage that is from the first terminal to the second terminal. The first diode may be a first diode D1 in FIG. 7 and FIG. 8. The second diode may be a second diode D2 in FIG. 7 and FIG. 8.

Specifically, when the third voltage from the first terminal to the second terminal is a positive third voltage, the positive electrode of the first diode is connected to the source device by using the first terminal, and the negative electrode of the second diode is connected to the source device by using the second terminal. In this way, after the third voltage that is output by the source device passes through the first diode and the second diode, a voltage from the third terminal to the fourth terminal is the determined positive third voltage, and a second polarity of the first voltage may be negative. In this way, the reverse voltage conduction module conducts only the reverse first voltage. In an actual application process, alternatively, a voltage output from the first terminal to the second terminal may be enabled to be the positive third voltage through wiring by an engineer.

Optionally, the diode group further includes: a third diode, where a negative electrode of the third diode is connected to the source device by using the first terminal, and a positive electrode of the third diode is connected to the switching circuit by using the fourth terminal, configured to conduct the reverse third voltage that is from the first terminal to the second terminal; and a fourth diode, where a positive electrode of the fourth diode is connected to the source device by using the second terminal, and a negative electrode of the fourth diode is connected to the switching circuit by using the third terminal, configured to conduct the reverse third voltage that is from the first terminal to the second terminal. For example, the third diode may be a third diode D3 in FIG. 7 and FIG. 8. The fourth diode may be a fourth diode D4 in FIG. 7 and FIG. 8.

In this embodiment of the present invention, regardless of whether the positive third voltage or the reverse third voltage from the first terminal to the second terminal is output by the source device, the positive third voltage can be output from the third terminal to the fourth terminal after passing through the first diode, the second diode, the third diode, and the fourth diode. The negative electrode of the third diode is connected to the source device by using the first terminal. The positive electrode of the third diode is connected to the switching circuit by using the fourth terminal. The positive electrode of the fourth diode is connected to the source device by using the second terminal. The negative electrode of the fourth diode is connected to the switching circuit by using the third terminal. When the voltage from the first terminal to the second terminal is the reverse third voltage, it can also be ensured that the positive third voltage is output from the third terminal to the fourth terminal. The polarity of the first voltage may be opposite to the polarity of the third voltage. Therefore, the second polarity of the first voltage may be negative. In this way, the reverse voltage conduction module can conduct the reverse first voltage.

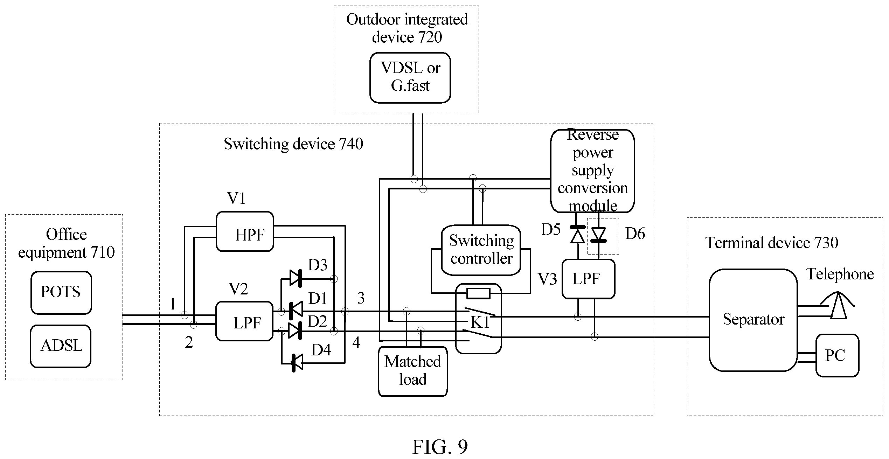

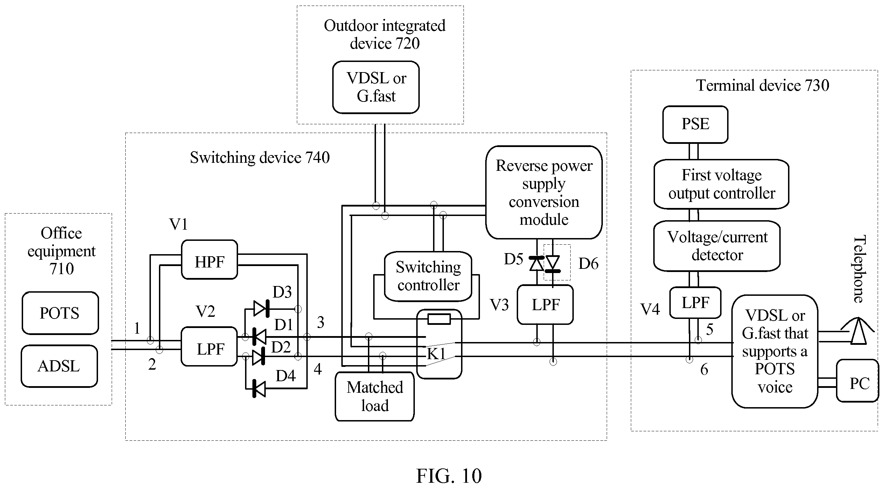

Optionally, the negative electrode of the first diode is connected to the source device by using the first terminal, and the positive electrode of the first diode is connected to the switching circuit by using the third terminal, the first diode is configured to conduct the reverse third voltage that is from the first terminal to the second terminal. The positive electrode of the second diode is connected to the source device by using the second terminal, and the negative electrode of the second diode is connected to the switching circuit by using the fourth terminal, the second diode is configured to conduct the reverse third voltage that is from the first terminal to the second terminal. The first diode may be a first diode D1 in FIG. 9 and FIG. 10. The second diode may be a second diode D2 in FIG. 9 and FIG. 10.

Specifically, when a voltage from the first terminal to the second terminal that is output by the source device is the reverse third voltage, the negative electrode of the first diode is connected to the source device by using the first terminal, and the positive electrode of the second diode is connected to the source device by using the second terminal. In this way, after the third voltage that is output by the source device passes through the first diode and the second diode, a voltage from the third terminal to the fourth terminal is the determined reverse third voltage, and the second polarity of the first voltage may be a positive voltage. In this way, the reverse voltage conduction module conducts only the positive first voltage.

Optionally, the positive electrode of the third diode is connected to the source device by using the first terminal, and the negative electrode of the third diode is connected to the switching circuit by using the fourth terminal, configured to conduct the positive third voltage that is from the first terminal to the second terminal. The negative electrode of the fourth diode is connected to the source device by using the second terminal, and the positive electrode of the fourth diode is connected to the switching circuit by using the third terminal, configured to conduct the positive third voltage that is from the first terminal to the second terminal. The third diode may be a third diode D3 in FIG. 9 and FIG. 10. The fourth diode may be a fourth diode D4 in FIG. 9 and FIG. 10.

Specifically, regardless of whether the positive third voltage or the reverse third voltage from the first terminal to the second terminal is output by the source device, the reverse third voltage can be output from the third terminal to the fourth terminal after passing through the first diode, the second diode, the third diode, and the fourth diode. The positive electrode of the third diode is connected to the source device by using the first terminal. The negative electrode of the third diode is connected to the switching circuit by using the fourth terminal. The negative electrode of the fourth diode is connected to the source device by using the second terminal. The positive electrode of the fourth diode is connected to the switching circuit by using the third terminal. When the voltage from the first terminal to the second terminal is the positive third voltage, it can also be ensured that the reverse third voltage is output from the third terminal to the fourth terminal. Therefore, the second polarity of the first voltage may be a positive voltage. In this way, the reverse voltage conduction module can conduct only the positive first voltage.

Optionally, the source device supports a plain old telephone service POTS and an asymmetric digital subscriber line ADSL service. The switching device further includes: a first low-pass filter, connected between the diode group and the source device, and configured to conduct a signal of the POTS; and a high-pass filter, connected between the source device and the switching circuit, and configured to conduct the asymmetric digital subscriber line ADSL service. For example, the first low-pass filter may be V2 in FIG. 7 to FIG. 11 and FIG. 13. The high-pass filter may be V1 in FIG. 7 to FIG. 11 and FIG. 13.

Specifically, the high-pass filter is directly connected between the source device and the switching circuit. The source device supports the POTS and the ADSL service, the POTS belongs to a low-frequency direct current signal, the ADSL service belongs to a high-frequency alternating current signal, and the POTS can provide a direct current voltage for the terminal device. Therefore, the POTS needs to be separated from the ADSL service by using the high-pass filter and the first low-pass filter, to prevent the diode group from affecting an ADSL alternating current signal.

Optionally, the switching device further includes: a matched load, connected between the diode group and the switching circuit, and configured to adjust a ringing signal of the POTS before the reverse voltage conduction module conducts the first voltage. For example, the matched load may be a matched load in FIG. 7 to FIG. 11 and FIG. 13.

Specifically, the diode group affects the ringing signal of the POTS. Therefore, to enable the source device to normally communicate with the terminal device, the matched load is required for balancing, to further ensure stability of the signal.

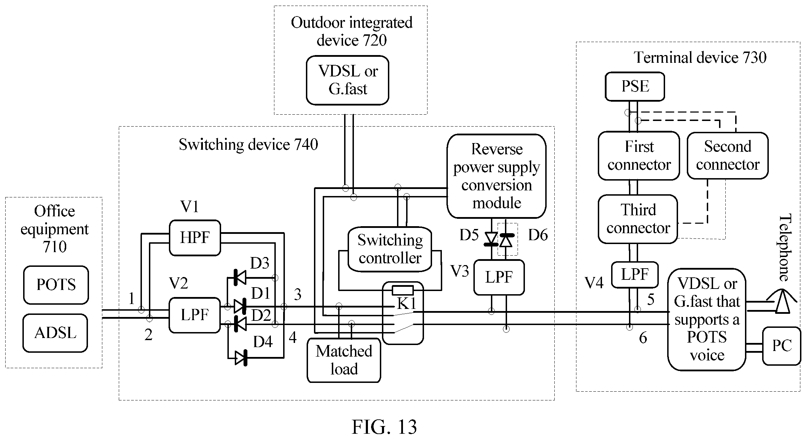

Optionally, the switching device further includes a reverse power supply module. The reverse power supply module is connected to the reverse voltage conduction module by using a fifth terminal and a sixth terminal. The reverse power supply module is configured to: enable a polarity of the first voltage from the fifth terminal to the sixth terminal to be a second polarity; and output the first voltage of the second polarity to the reverse voltage conduction module. The second polarity is opposite to the first polarity. The reverse voltage conduction module is further configured to receive the second voltage of the first polarity before conducting the first voltage. For example, the reverse power supply module may include a first voltage output controller and a voltage/current detector in FIG. 8, FIG. 10, and FIG. 11. Certainly, the reverse power supply module may also include a PSE in FIG. 8, FIG. 10, and FIG. 11, and the reverse power supply module may further include a PSE, a first connector, a second connector, and a third connector in FIG. 13.

Optionally, the reverse voltage conduction module includes a fifth diode. When the second polarity is negative, the fifth diode is configured to reversely conduct the first voltage, a negative electrode of the fifth diode is connected to the reverse power supply module by using the fifth terminal, and a positive electrode of the fifth diode is connected to the switching circuit. The fifth diode may be a fifth diode D5 in FIG. 7, FIG. 8, and FIG. 13.

Optionally, when the second polarity is positive, the fifth diode is configured to forward conduct the first voltage, a positive electrode of the fifth diode is connected to the reverse power supply module by using the fifth terminal, and a negative electrode of the fifth diode is connected to the switching circuit. The fifth diode may be a fifth diode D5 in FIG. 9, FIG. 10, and FIG. 11.

Specifically, the fifth diode included in the reverse voltage conduction module determines a conduction direction based on the second polarity of the first voltage. When the second polarity is positive, the fifth diode is configured to forward conduct the first voltage. When the second polarity is negative, the fifth diode is configured to reversely conduct the first voltage.

Optionally, the reverse voltage conduction module further includes a sixth diode. When the second polarity is negative, the sixth diode is configured to forward conduct the first voltage, a positive electrode of the sixth diode is connected to the reverse power supply module by using the sixth terminal, and a negative electrode of the sixth diode is connected to the switching circuit. The sixth diode may be a sixth diode D6 in FIG. 7, FIG. 8, and FIG. 13.

Optionally, when the second polarity is positive, the sixth diode is configured to reversely conduct the first voltage, a negative electrode of the sixth diode is connected to the reverse power supply module by using the sixth terminal, and a positive electrode of the sixth diode is connected to the switching circuit. The sixth diode may be a sixth diode D6 in FIG. 9, FIG. 10, and FIG. 11.

Specifically, the sixth diode included in the reverse voltage conduction module can further ensure that the first voltage of the second polarity can be conducted. For example, when the fifth diode is broken down, the sixth diode may be used to conduct the first voltage of the second polarity.

Optionally, the reverse power supply module includes: a voltage/current detector, configured to: detect the first polarity of the third voltage that is from the fifth terminal to the sixth terminal, and send the first polarity to a first voltage output controller; and the first voltage output controller, configured to: receive the first polarity, and control outputting of the first voltage of the second polarity based on the first polarity. The voltage/current detector may be the voltage/current detector in FIG. 8, FIG. 10, and FIG. 11. The first voltage output controller may be the first voltage output controller in FIG. 8, FIG. 10, and FIG. 11.

Specifically, when the voltage/current detector detects that the first polarity is positive, the first voltage output controller controls outputting of the negative first voltage. When the voltage/current detector detects that the first polarity is negative, the first voltage output controller controls outputting of the positive first voltage.

Optionally, the first voltage output controller is specifically configured to output a pulse sequence when a voltage value of the third voltage is zero. The voltage/current detector is further configured to detect a polarity of the pulse sequence. The reverse voltage conduction module is configured to conduct the pulse sequence. The first voltage output controller is further configured to: when the reverse voltage conduction module conducts the pulse sequence, enable the polarity of the pulse sequence to be the second polarity.

Specifically, when the voltage value of the third voltage is zero, the first voltage output controller controls outputting of the pulse sequence. When the reverse voltage conduction module conducts the pulse sequence, the voltage/current detector is configured to: detect the polarity of the pulse sequence, send the polarity of the pulse sequence to the first voltage output controller, and determine that the polarity of the pulse sequence is the second polarity.

Optionally, the reverse power supply module further includes a first connector, a second connector, a third connector, and a reverse power supply. The first connector is connected between the reverse power supply and the third connector. The third connector is connected between the first connector and the reverse voltage conduction module. The second connector is connected to the reverse power supply. A connection direction of the first connector is opposite to a connection direction of the second connector. When the first polarity is the same as the second polarity, the first connector is disconnected from the third connector, and the second connector is connected to the third connector. The first connector, the second connector, and the third connector may be the first connector, the second connector, and the third connector in FIG. 13.

Further, the reverse power supply module may further include an indicator. If the indicator is normal, and the reverse power supply module outputs the first voltage, it indicates that the first connector is normally connected to the third connector. When the indicator is abnormal, it indicates that the first connector is abnormally connected to the third connector. Therefore, a user needs to manually disconnect the first connector from the third connector, and manually connect the first connector to the second connector.

Optionally, a difference between a voltage value of the first voltage and a voltage value of the third voltage is greater than a preset threshold, and the voltage value of the first voltage is greater than the voltage value of the third voltage.

Optionally, the switching device further includes a second voltage output controller, where an output end of the second voltage output controller is connected to the reverse voltage conduction module, to control outputting of the first voltage. The reverse voltage conduction module further includes: a high-voltage conductor, connected between the second voltage output controller and the switching circuit, and configured to conduct the first voltage; and a voltage converter, connected between the high-voltage conductor and the switching circuit, and configured to perform, after the high-voltage conductor conducts the first voltage, step-down conversion processing on the first voltage to obtain a step-down first voltage. The switching circuit is specifically configured to switch the source device to the target device by using the step-down first voltage. For example, the second voltage output controller, the high-voltage conductor, and the voltage converter may be a second voltage output controller, a high-voltage conductor, and a high-voltage converter in FIG. 12.

Specifically, the switching device may further include the second voltage output controller, configured to control outputting of the first voltage with a first voltage value. The voltage value of the third voltage is a second voltage value. A result obtained by subtracting the second voltage value from the first voltage value is greater than the preset threshold. In this way, the high-voltage conductor can conduct the first voltage with the first voltage value. The voltage converter performs step-down conversion on the first voltage with the first voltage value. The step-down first voltage supplies electrical energy to the switching circuit to switch the source device to the target device.

Optionally, the switching device further includes a second low-pass filter, connected between the reverse voltage conduction module and the reverse power supply module, and configured to block at least one of the ADSL service, the very-high-data-rate digital subscriber line VDSL service, and the G.fast service. For example, the second low-pass filter may be V3 in FIG. 7 to FIG. 13.

In this embodiment of the present invention, to prevent the switching device from affecting a normal ADSL service, very-high-data-rate digital subscriber line VDSL service, and G.fast service, the second low-pass filter is added to block the ADSL service, the very-high-data-rate digital subscriber line VDSL service, and the G.fast service, thereby preventing the reverse voltage conduction module from affecting the ADSL service, the very-high-data-rate digital subscriber line VDSL service, and the G.fast service.

Optionally, the switching device further includes a third low-pass filter, connected between the reverse power supply conversion module and the switching circuit, and configured to block the ADSL service, the very-high-data-rate digital subscriber line VDSL service, and the G.fast service after the first voltage is conducted, to prevent the reverse power supply conversion module from affecting the normal ADSL service, very-high-data-rate digital subscriber line VDSL service, and G.fast service. The third low-pass filter may be V5 in FIG. 11 and FIG. 12.

Optionally, the switching device further includes a fourth low-pass filter, connected between the reverse voltage conduction module and the voltage/current detector, and configured to block the ADSL service, the very-high-data-rate digital subscriber line VDSL service, and the G.fast service, to prevent the voltage/current detector and the second voltage output controller from affecting the ADSL service, the very-high-data-rate digital subscriber line VDSL service, and the G.fast service. For example, the fourth low-pass filter may be V4 in FIG. 8, and FIG. 10 to FIG. 13.

Optionally, the first terminal, the second terminal, the third terminal, and the fourth terminal mentioned in the foregoing embodiment may be respectively 1, 2, 3, and 4 marked in FIG. 7 to FIG. 11 and FIG. 13. The fifth terminal and the sixth terminal may be respectively 5 and 6 marked in FIG. 10 to FIG. 13 and FIG. 8.

It should be understood that in this embodiment of the present invention, the third voltage may be a direct current voltage corresponding to the POTS. The third voltage provides a power supply for the terminal device. The first voltage is a reverse direct current voltage provided by the PSE in the terminal device for the outdoor integrated device.

FIG. 3 shows a reverse power supply equipment 300 according to an embodiment of the present invention. The reverse power supply equipment 300 includes:
a voltage/current detector 310 and a first voltage output controller 320. The voltage/current detector 310 is configured to: detect a first polarity of a third voltage, and output the first polarity to the first voltage output controller 320. The third voltage corresponds to a first service. The first voltage output controller 320 is configured to: receive the first polarity that is input by the voltage/current detector, and control outputting of the first voltage of a second polarity based on the first polarity, so that a switching circuit switches, based on the first voltage of the second polarity, a source device connected to a terminal device to a target device. The first polarity is opposite to the second polarity.

Optionally, a connection relationship between the voltage/current detector 310 and the first voltage output controller 320 is not limited. For example, an output end of the voltage/current detector is connected to an input end of the first voltage output controller.

For example, the voltage/current detector 310 may be a voltage/current detector in FIG. 8, FIG. 10, and FIG. 11. The first voltage output controller 320 may be a first voltage output controller in FIG. 8, FIG. 10, and FIG. 11.

Optionally, the first voltage output controller 320 is specifically configured to: when the first polarity is negative, control outputting of the positive first voltage, or when the first polarity is positive, control outputting of the negative first voltage.

Optionally, the first voltage output controller 320 is specifically configured to control outputting of a pulse sequence when a voltage value of the third voltage is zero. The voltage/current detector is specifically configured to: detect a polarity of the pulse sequence, and when a power supply conduction device conducts the pulse sequence, determine that the polarity of the pulse sequence is a polarity of the third voltage.

Optionally, the first service is a plain old telephone service POTS.

Optionally, the reverse power supply equipment 300 further includes: a fourth low-pass filter, connected between a reverse voltage conduction module and the voltage/current detector, and configured to block at least one of an ADSL service, a very-high-data-rate digital subscriber line VDSL service, and a G.fast service. The low-pass filter is a fourth low-pass filter in the first aspect. For example, the fourth low-pass filter may be a fourth low-pass filter V4 in FIG. 8, and FIG. 10 to FIG. 12.

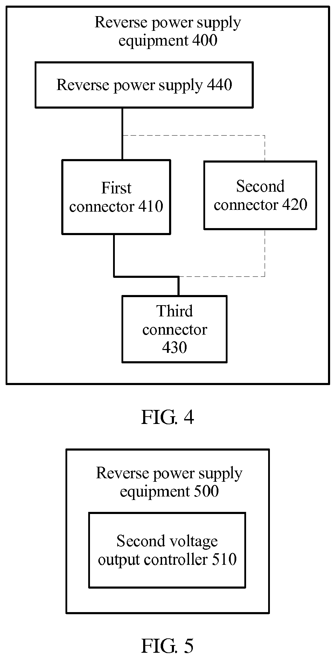

FIG. 4 shows a reverse power supply equipment 400 according to an embodiment of the present invention. The reverse power supply equipment 400 includes a first connector 410, a second connector 420, a third connector 430, and a reverse power supply 440. The first connector 410 is connected between the reverse power supply and the third connector 430. The third connector 430 is connected between the first connector 410 and a reverse voltage conduction module. The second connector 420 is connected to the reverse power supply. A connection direction of the first connector 410 is opposite to a connection direction of the second connector 420. When a first polarity is the same as a second polarity, the first connector 410 is disconnected from the third connector 430, and the second connector 420 is connected to the third connector 430.

For example, the reverse power supply 440 may be a PSE in FIG. 13. The first connector 410 may be a first connector in FIG. 13. The second connector 420 may be a second connector in FIG. 13. The third connector 430 may be a third connector in FIG. 13.

FIG. 5 shows a reverse power supply equipment 500 according to an embodiment of the present invention. The reverse power supply equipment 500 includes a second voltage output controller 510. An output end of the second voltage output controller 510 is connected to a reverse voltage conduction module in the switching device 200, to control outputting of a first voltage. A difference between a voltage value of the first voltage and a voltage value of a third voltage that is output by a source device is greater than a preset threshold. The voltage value of the first voltage is greater than the voltage value of the third voltage.

For example, the second voltage output controller 510 may be a second voltage output controller in FIG. 12. The output end of the second voltage output controller is connected to a high-voltage conductor.

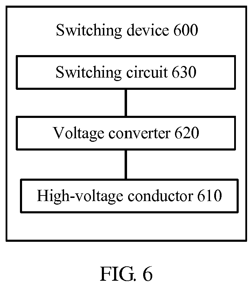

FIG. 6 shows a switching device 600 according to an embodiment of the present invention. The switching device 600 includes a high-voltage conductor 610, a voltage converter 620, and a switching circuit 630. The high-voltage conductor 610 is connected between a second voltage output controller and the switching circuit 630, and configured to conduct a first voltage. The voltage converter 620 is connected between the high-voltage conductor and the switching circuit, and configured to perform, after the high-voltage conductor conducts the first voltage, step-down conversion processing on the first voltage to obtain a step-down first voltage. The switching circuit 630 is connected between a target device and the voltage converter 620, and configured to switch a source device to the target device by using the step-down first voltage. For example, the switching device 600 may be the switching device 200 in FIG. 1.

For example, the high-voltage conductor 610 may be a high-voltage conductor in FIG. 12. The voltage converter may be a high-voltage converter in FIG. 12. The switching circuit 630 may be a switching controller and a relay K1 shown in FIG. 12.

The following describes several specific embodiments. Descriptions are performed by using an example in which a source device is an office equipment and a target device is an outdoor integrated device. The office equipment supports a POTS and an ADSL service. The outdoor integrated device supports a VDSL service or a G.fast service. A connection relationship between modules in FIG. 7 to FIG. 13 is not limited in the embodiments of the present invention.

In a specific embodiment, a POTS signal is a low frequency signal, and an ADSL signal is a high frequency signal. As shown in FIG. 7, 1, 2, 3, 4, 5, and 6 in FIG. 7 respectively represent a first terminal, a second terminal, a third terminal, a fourth terminal, a fifth terminal, and a sixth terminal. Before a switching device 740 performs switching, an office equipment 710 is connected to a terminal device 730 by using the switching device 740, and a relay K1 is connected to the third terminal 3 and the fourth terminal 4. A POTS and an ADSL service flowing from the office equipment pass through a high-pass filter (HPF) V1 to conduct an ADSL signal and block a POTS signal, and pass through a first low-pass filter (LPF) V2 to conduct the POTS and block the ADSL service, so that the POTS signal passes through a diode group (D1/D2/D3/D4) shown in FIG. 7. For the POTS signal passing through V2, a voltage from the third terminal 3 to the fourth terminal 4 is a positive voltage, and a voltage from the fourth terminal 4 to the third terminal 3 is a negative voltage. Because the added diode group affects stability of POTS ringing, a matched load is added between the diode group and K1. A function of the matched load is to eliminate instability of the ringing. In this case, a voltage from the third terminal 3 to the fourth terminal 4 is also a positive voltage. As shown in FIG. 8, a reverse power supply module includes a voltage/current detector and a first voltage output controller. The voltage/current detector detects a voltage that is from a fifth terminal 5 to a sixth terminal 6. The voltage/current detector reports the detected voltage that is from the fifth terminal 5 to the sixth terminal 6 to the first voltage output controller. If the voltage from the fifth terminal 5 to the sixth terminal 6 is a positive voltage, the first voltage output controller controls a PSE to output a reverse first voltage that is from the fifth terminal 5 to the sixth terminal 6. A reverse power supply conduction device may be a fifth diode D5 in FIG. 7. The fifth diode D5 is configured to perform reverse conduction. A negative electrode of the fifth diode D5 is connected to the voltage/current detector by using the fifth terminal. If the voltage/current detector detects that the voltage from the fifth terminal 5 to the sixth terminal 6 is a negative voltage, it indicates that the fifth terminal 5 and the sixth terminal 6 are incorrectly connected. To be specific, the fifth terminal 5 is connected to a lower wire while the sixth terminal 6 is connected to an upper wire. In this case, the first voltage output controller controls outputting of the positive voltage that is from the fifth terminal 5 to the sixth terminal 6. The fifth diode D5 may also conduct the voltage. When the fifth diode D5 conducts the voltage, a reverse power supply conversion module converts the first voltage conducted by the fifth diode D5 into a second voltage required by VDSL or G.fast. A switching circuit includes a switching controller and a relay K1. The switching controller also uses a direct current of the second voltage to control the relay K1 to conduct a voltage that is from a third terminal 3 and a fourth terminal 4 to an outdoor integrated device 720. In this case, a terminal device is a terminal of VDSL or G.fast that supports a POTS voice. In other words, the corresponding terminal device is also upgraded after the POTS and the ADSL service are upgraded.

Specifically, the diode group in FIG. 7 and FIG. 8 includes a first diode D1, a second diode D2, a third diode D3, and a fourth diode D4. Connection relationships between D1, D2, D3, and D4 are as follows: A positive electrode of D1 is connected to the office equipment 710 by using the first terminal 1, and a negative electrode of D1 is connected to the switching circuit by using the third terminal 3. A negative electrode of D2 is connected to the office equipment 710 by using the second terminal 2, and a positive electrode of D2 is connected to the switching circuit by using the fourth terminal 4. A negative electrode of D3 is connected to the office equipment 710 by using the first terminal 1, and a positive electrode of D3 is connected to the switching circuit by using the fourth terminal 4. A positive electrode of D4 is connected to the office equipment 710 by using the second terminal 2, and a negative electrode of D4 is connected to the switching circuit by using the third terminal 3. In this way, regardless of whether a polarity of a voltage from the first terminal to the second terminal that is output by the office equipment 710 is positive or negative, a polarity of the voltage from the third terminal to the fourth terminal can be enabled to be positive.

In a specific embodiment, as shown in FIG. 7, the diode group may not include the third diode D3 and the fourth diode D4, but include only the first diode D1 and the second diode D2. In a process of wiring when an engineer installs an outdoor integrated device, a voltage from the first terminal 1 to the second terminal 2 is enabled to be a positive third voltage. In this way, during switching, a voltage from the third terminal 3 to the fourth terminal 4 is enabled to be the positive third voltage.

Optionally, the diode group and the matched load of the switching device in FIG. 7 and FIG. 8 may alternatively be removed, and a positive third voltage from the first terminal 1 to the second terminal 2 is ensured during wiring by an engineer.

Optionally, as shown in FIG. 7 and FIG. 8, a sixth diode D6 may be added. A conduction direction of the sixth diode D6 is opposite to a conduction direction of the fifth diode D5. To be specific, when the fifth diode D5 is broken down, D6 may be selected to conduct the negative first voltage.

In FIG. 7 and FIG. 8, the diode group is used, so that a polarity of the third voltage from the third terminal 3 to the fourth terminal 4 that is output by the office equipment is positive. The first voltage output controller outputs the reverse first voltage that is from the fifth terminal 5 to the sixth terminal 6. The first voltage is conducted by using the fifth diode D5. The reverse power supply conversion module converts the first voltage into the second voltage required by the outdoor integrated device. The switching controller the relay to switch from the office equipment 710 to the outdoor integrated device 720 by using the second voltage. In this way, automatic switching from the office equipment 710 to the outdoor integrated device 720 is completed, thereby reducing human costs and reducing engineering complexity.

In a specific embodiment, functions of modules in FIG. 9 that are the same as those in FIG. 7 are not repeatedly described herein. A difference between FIG. 9 and FIG. 7 lies in that a direction of a diode group, a direction of a fifth diode, and a direction of a sixth diode in FIG. 9 are different from those in FIG. 7. Functions of modules in FIG. 10 that are the same as those in FIG. 8 are not repeatedly described herein. Differences between FIG. 10 and FIG. 8 are as follows: A direction of a diode group, a direction of a fifth diode, and a direction of a sixth diode in FIG. 10 are different from those in FIG. 8. In FIG. 8, a polarity of the voltage that is from the third terminal 3 to the fourth terminal 4 and that is obtained after the third voltage that is output by the office equipment 710 passes through the diode group is positive, and a polarity of the first voltage from the fifth terminal 5 to the sixth terminal 6 that is output by the first voltage output controller is negative. Therefore, the fifth diode D5 reversely conducts the first voltage. The negative electrode of the fifth diode D5 is connected to the fifth terminal 5. In FIG. 10, a plurality of a voltage that is from a third terminal 3 to a fourth terminal 4 and that is obtained after a third voltage that is output by an office equipment 710 passes through a diode group is negative, and a polarity of a first voltage from a fifth terminal 5 to a sixth terminal 6 that is output by a first voltage output controller is positive. Therefore, the fifth diode D5 forward conducts the first voltage, and a positive electrode of the fifth diode D5 is connected to the fifth terminal.

Specifically, the diode group in FIG. 9 and FIG. 10 includes a first diode D1, a second diode D2, a third diode D3, and a fourth diode D4. Connection relationships between D1, D2, D3, and D4 are as follows: A negative electrode of D1 is connected to the office equipment 710 by using a first terminal 1, and a positive electrode of D1 is connected to a switching circuit by using the third terminal 3. A positive electrode of D2 is connected to the office equipment 710 by using a second terminal 2, and a negative electrode of D2 is connected to the switching circuit by using the fourth terminal 4. A positive electrode of D3 is connected to the office equipment 710 by using the first terminal 1, and a negative electrode of D3 is connected to the switching circuit by using the fourth terminal 4. A negative electrode of D4 is connected to the office equipment 710 by using the second terminal 2, and a positive electrode of D4 is connected to the switching circuit by using the third terminal 3. In this way, regardless of whether a polarity of a voltage from the first terminal to the second terminal that is output by the office equipment 710 is positive or negative, a polarity of the voltage from the third terminal to the fourth terminal can be enabled to be negative.

In a specific embodiment, as shown in FIG. 9, the diode group may not include the third diode D3 and the fourth diode D4, but include only the first diode D1 and the second diode D2. In a process of wiring when an engineer installs an outdoor integrated device, a voltage from the first terminal 1 to the second terminal 2 is a reverse third voltage. In this way, during switching, a voltage from the third terminal 3 to the fourth terminal 4 is enabled to be the reverse third voltage.

Optionally, the diode group and a matched load of a switching device in FIG. 9 and FIG. 10 may alternatively be removed, and a reverse third voltage from the first terminal 1 to the second terminal 2 is ensured during wiring by an engineer.

Optionally, as shown in FIG. 9 and FIG. 10, a sixth diode D6 may be added. A conduction direction of the sixth diode D6 is opposite to a conduction direction of the fifth diode D5. To be specific, when the fifth diode D5 is broken down, D6 may be selected to conduct the positive first voltage.

It should be noted that a function of a second low-pass filter V3 in FIG. 7 and FIG. 9 is to block a VDSL service, an ADSL service, or a G.fast service, to prevent a reverse power supply conversion module from affecting the VDSL service, the ADSL service, or the G.fast service, and a function of a fourth low-pass filter V4 in FIG. 8 and FIG. 10 is also to block a VDSL service, an ADSL service, or a G.fast service, to prevent the voltage/current detector and the first voltage output controller from affecting the VDSL service, the ADSL service, or the G.fast service.

In FIG. 9 and FIG. 10, the diode group is used, so that a polarity of the third voltage from the third terminal 3 to the fourth terminal 4 that is output by the office equipment is negative. The first voltage output controller outputs the positive first voltage that is from the fifth terminal 5 to the sixth terminal 6. The first voltage is conducted by using the fifth diode D5. The reverse power supply conversion module converts the first voltage into a second voltage required by an outdoor integrated device. A switching controller switches a relay to the outdoor integrated device 720 by using the second voltage. In this way, automatic switching from the office equipment 710 to the outdoor integrated device 720 is completed, thereby reducing human costs and reducing engineering complexity.

In a specific embodiment, the switching controller is directly connected to the reverse voltage conduction module. The reverse voltage conduction module includes the fifth diode D5. As shown in FIG. 11, a switching controller included by a switching circuit is directly connected to a fifth diode D5, and a reverse power supply conversion module is directly connected to the outdoor integrated device 720. In this way, electrical energy of the switching controller can be provided by using a first voltage instead of a second voltage that is obtained after the reverse power supply conversion module performs conversion.

Optionally, a connection relationship of the reverse power supply conversion module in FIG. 7 to FIG. 10 may be the same as a connection relationship shown in FIG. 11. This is not limited in this embodiment of the present invention.

In a specific embodiment, as shown in FIG. 12, a switching device 740 may further include a second voltage output controller, and a reverse voltage conduction module includes a high-voltage conductor and a high-voltage converter. Before the switching device 740 performs switching, a terminal device 730 is directly connected to an office equipment 710. A third voltage that is output by the office equipment 710 is usually from 10 V to 60 V. The second voltage output controller may control outputting of a first voltage with a large voltage value. For example, the voltage value of the first voltage may be 150 V. In this way, the high-voltage conductor can conduct the first voltage with the large voltage value. After the high-voltage conductor conducts the first voltage, the high-voltage converter performs step-down conversion processing on the first voltage to obtain a voltage required by a switching circuit. In this way, the switching circuit can switch the office equipment 710 to an outdoor integrated device 720 based on a step-down first voltage. After the switching, a PSE can normally supply electrical energy to the outdoor integrated device 720. In other words, the second voltage output controller, the high-voltage conductor, and the high-voltage converter shown in FIG. 12 are used to supply, to the switching circuit, electrical energy required for switching.

In a specific embodiment, as shown in FIG. 13, a reverse power supply module may include a first connector, a second connector, and a third connector. A connection direction of the second connector is opposite to a connection direction of the first connector. An indicator may be used to indicate whether a connection is correct or incorrect. For example, it may be set in such a manner that the indicator is normal when a reverse power supply (PSE) outputs a reverse first voltage that is from a fifth terminal 5 to a sixth terminal 6, and that the indicator is abnormal when the PSE outputs a positive first voltage that is from the fifth terminal 5 to the sixth terminal 6. A user may manually disconnect the first connector from the third connector, and connect the second connector to the third connector.

Optionally, a connection relationship of a diode group shown in FIG. 13 may be the same as a connection relationship of the diode shown in FIG. 10. In this way, a polarity of a third voltage from a third terminal 3 to a fourth terminal 4 is negative. It may be set in such a manner that the indicator is normal when the reverse power supply (PSE) outputs a positive first voltage that is from the fifth terminal 5 to the sixth terminal 6, and the indicator is abnormal when the PSE outputs a reverse first voltage that is from the fifth terminal 5 to the sixth terminal 6. A user may manually disconnect the first connector from the third connector, and connect the second connector to the third connector.

Optionally, when the office equipment supports both a POTS and a VDSL service, the first low-pass filter V2 and the high-pass filter V1 are added in FIG. 7 to FIG. 11 and FIG. 13, to prevent the diode group from affecting the VDSL service. In an actual application process, the first low-pass filter V2 and the high-pass filter V1 may not be added. This is not limited in this embodiment of the present invention.

Optionally, the office equipment may support only the POTS. The switching device in FIG. 7 to FIG. 11 and FIG. 13 may not include the first low-pass filter V2 and the high-pass filter V1. In other words, the first low-pass filter in this embodiment of the present invention is intended to separate the POTS from the ADSL service. When the source device supports only the POTS, the first low-pass filter and the high-pass filter may not be needed.

It should be understood that the office equipment 710 mentioned in FIG. 7 to FIG. 13 may be the office equipment 110 in FIG. 1. The outdoor integrated device 720 in FIG. 7 to FIG. 13 may be the outdoor integrated device 120 in FIG. 1. The terminal device 730 in FIG. 7 to FIG. 13 may be the terminal device 130 in FIG. 1. The switching device 740 in FIG. 7 to FIG. 13 may be the switching device 200 in FIG. 1.

A person of ordinary skill in the art may be aware that, in combination with the embodiments disclosed in this specification, method steps and units may be implemented by electronic hardware, computer software, or a combination thereof. To clearly describe interchangeability between the hardware and the software, steps and compositions of each embodiment are generally described above according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing device and unit, refer to a corresponding process in the foregoing method embodiments. Details are not described herein.

In the embodiments provided in this application, it should be understood that the disclosed device and method may be implemented in another manner. For example, the described device embodiment is merely an example. For example, the unit division is merely logical function division and may be other division in actual implementation. For example, a plurality of units or components may be combined or integrated into another device, or some features may be ignored or not performed. In addition, the displayed or discussed mutual couplings or direct couplings or communication connections may be implemented through some interfaces, indirect couplings or communication connections between the devices or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, a network device, or the like) to perform all or a part of the steps of the methods described in the embodiments of the present invention. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A switching device (200), wherein the switching device comprises:
a reverse voltage conduction module (210), configured to conduct a first voltage provided by a terminal device; and
a switching circuit (220), configured to switch, by using the first voltage conducted by the reverse voltage conduction module (210), a device connected to the terminal device (130) from a source device (110) to a target device (120), so that the terminal device (130) reversely supplies power to the target device (120), wherein the source device (110) forward supplies power to the terminal device (130) before the switching circuit (220) switches the device connected to the terminal device (130) from the source device (110) to the target device (120), wherein
an output end of the reverse voltage conduction module is connected to an input end of the switching circuit, and an output end of the switching circuit is connected to an input end of the target device.

2. The switching device according to claim 1, wherein the switching device further comprises:
a reverse power supply conversion module, connected between the target device and the reverse voltage conduction module (210), and configured to convert, after the reverse voltage conduction module conducts the first voltage, the first voltage into a second voltage required by the target device.

3. The switching device according to claim 2, wherein the reverse power supply conversion module is connected between the switching circuit (220) and the reverse voltage conduction module (210), and the second voltage supplies electrical energy to the switching circuit (220).

4. The switching device according to claim 2, wherein the reverse power supply conversion module is connected between the switching circuit (220) and the target device (120), and the first voltage supplies electrical energy to the switching circuit (220).

5. The switching device according to any one of claims 1 to 4, wherein the switching circuit comprises:
a switching controller, configured to: when the reverse voltage conduction module (D5, D6, 210) conducts the first voltage, control a relay (K1) to switch the source device connected to the terminal device to the target device; and
the relay (K1), configured to switch, under control of the switching controller, the source device connected to the terminal device to the target device, wherein
the output end of the reverse voltage conduction module (D5, D6, 210) is connected to an input end of the switching controller, an output end of the switching controller is connected to an input end of the relay, and an output end of the relay is connected to the target device.

6. The switching device according to any one of claims 1 to 5, wherein the switching device further comprises:
a diode group (D1, D2, D3, D4), connected to the source device by using a first terminal (1) and a second terminal (2), connected to the switching circuit by using a third terminal (3) and a fourth terminal (4), and configured to enable a polarity of a third voltage from the first terminal (1) to the second terminal (2) that is output by the source device to be a first polarity.

7. The switching device according to claim 6, wherein the diode group (D1, D2, D3, D4) comprises:
a first diode (D1), wherein a positive electrode of the first diode (D1) is connected to the source device by using the first terminal (1), and a negative electrode of the first diode (D1) is connected to the switching circuit (220) by using the third terminal (3), configured to conduct the positive third voltage that is from the first terminal (1) to the second terminal (2); and
a second diode (D2), wherein a negative electrode of the second diode (D2) is connected to the source device by using the second terminal (2), and a positive electrode of the second diode (D2) is connected to the switching circuit (220) by using the fourth terminal (4), configured to conduct the positive third voltage that is from the first terminal (1) to the second terminal (2).

8. The switching device according to claim 6 or 7, wherein the diode group (D1, D2, D3, D4) further comprises:
a third diode (D3), wherein a negative electrode of the third diode (D3) is connected to the source device by using the first terminal (1), and a positive electrode of the third diode (D3) is connected to the switching circuit (220) by using the fourth terminal (4), configured to conduct the reverse third voltage that is from the first terminal (1) to the second terminal (2); and
a fourth diode (D4), wherein a positive electrode of the fourth diode (D4) is connected to the source device by using the second terminal (2), and a negative electrode of the fourth diode (D4) is connected to the switching circuit (220) by using the third terminal (3), configured to conduct the reverse third voltage that is from the first terminal (1) to the second terminal (2).

9. The switching device according to any one of claims 6 to 8, wherein the source device supports a plain old telephone service, POTS, and an asymmetric digital subscriber line, ADSL, service (710), and
the switching device further comprises:
a first low-pass filter (V2), connected between the diode group (D1, D2, D3, D4) and the source device, and configured to conduct a signal of the POTS; and
a high-pass filter (V1), connected between the source device (710) and the switching circuit (220), and configured to conduct the ADSL service.

10. The switching device according to any one of claims 6 to 9, wherein the switching device further comprises:
a matched load, connected between the diode group (D1, D2, D3, D4) and the switching circuit (220), and configured to adjust a ringing signal of the POTS before the reverse voltage conduction module (210) conducts the first voltage.

11. The switching device according to any one of claims 6 to 10, wherein the switching device (200) further comprises a reverse power supply module, and the reverse power supply module is connected to the reverse voltage conduction module (210) by using a fifth terminal (5) and a sixth terminal (6);
the reverse power supply module is configured to:
enable a polarity of the first voltage from the fifth terminal (5) to the sixth terminal to be a second polarity; and
output the first voltage of the second polarity to the reverse voltage conduction module (210), wherein the second polarity is opposite to the first polarity; and
the reverse voltage conduction module is further configured to receive the first voltage of the second polarity before conducting the first voltage.

12. The switching device according to claim 11, wherein the reverse voltage conduction module comprises a fifth diode, and
when the second polarity is negative, the fifth diode is configured to reversely conduct the first voltage, a negative electrode of the fifth diode is connected to the reverse power supply module by using the fifth terminal (5), and a positive electrode of the fifth diode is connected to the switching circuit, or
when the second polarity is positive, the fifth diode is configured to forward conduct the first voltage, a positive electrode of the fifth diode is connected to the reverse power supply module by using the fifth terminal (5), and a negative electrode of the fifth diode is connected to the switching circuit.

13. The switching device according to claim 11 or 12, wherein the reverse power supply module comprises:
a voltage/current detector, configured to: detect the first polarity of the first voltage that is from the fifth terminal (5) to the sixth terminal, and send the first polarity to a first voltage output controller; and
the first voltage output controller, configured to: receive the first polarity, and control outputting of the first voltage of the second polarity based on the first polarity.

14. The switching device according to claim 11 or 12, wherein the reverse power supply module further comprises:
a first connector, a second connector, a third connector, and a reverse power supply, wherein the first connector is connected between the reverse power supply and the third connector, the third connector is connected between the first connector and the reverse voltage conduction module, the second connector is connected to the reverse power supply, and a connection direction of the first connector is opposite to a connection direction of the second connector; and
when the first polarity is the same as the second polarity, the first connector is disconnected from the third connector, and the second connector is connected to the third connector.

15. The switching device according to claim 4 or 5, wherein a difference between a voltage value of the first voltage and a voltage value of a third voltage is greater than a preset threshold, and the voltage value of the first voltage is greater than the voltage value of the third voltage.

## Patentansprüche

1. Schaltvorrichtung (200), wobei die Schaltvorrichtung Folgendes umfasst:
ein Rückspannungsleitmodul (210), das dazu konfiguriert ist, eine erste Spannung zu leiten, die von einer Endgerätvorrichtung bereitgestellt wird; und
einen Schaltkreis (220), der dazu konfiguriert ist, eine an die Endgerätvorrichtung (130) angeschlossene Vorrichtung durch Anwenden der ersten Spannung von einer Quellgerätvorrichtung (110) zu einer Zielgerätvorrichtung (120) zu schalten, die von dem Rückspannungsleitmodul (210) geleitet wird, sodass die Endgerätvorrichtung (130) Leistung rückwärts an die Zielgerätvorrichtung (120) zuführt, wobei die Quellgerätvorrichtung (110) Leistung vorwärts an die Endgerätvorrichtung (130) zuführt, bevor der Schaltkreis (220) die an die Endgerätvorrichtung (130) angeschlossene Vorrichtung von der Quellgerätvorrichtung (110) zu der Zielgerätvorrichtung (120) schaltet, wobei
ein Ausgabeende des Rückspannungsleitmoduls an ein Eingabeende des Schaltkreises angeschlossen ist, und wobei ein Ausgabeende des Schaltkreises an ein Eingabeende der Zielgerätvorrichtung angeschlossen ist.

2. Schaltvorrichtung nach Anspruch 1, wobei die Schaltvorrichtung ferner Folgendes umfasst:
ein Rückleistungszuführumwandlungsmodul, das zwischen der Zielgerätvorrichtung und dem Rückspannungsleitmodul (210) angeschlossen und dazu konfiguriert ist, die erste Spannung in eine zweite Spannung, die für die Zielgerätvorrichtung erforderlich ist, zu konvertieren, nachdem das Rückspannungsleitmodul die erste Spannung leitet.

3. Schaltvorrichtung nach Anspruch 2, wobei das Rückleistungszuführumwandlungsmodul zwischen dem Schaltkreis (220) und dem Rückspannungsleitmodul (210) angeschlossen ist, und wobei die zweite Spannung elektrische Energie an den Schaltkreis (220) zuführt.

4. Schaltvorrichtung nach Anspruch 2, wobei das Rückleistungszuführumwandlungsmodul zwischen dem Schaltkreis (220) und der Zielgerätvorrichtung (120) angeschlossen ist, und wobei die erste Spannung elektrische Energie an den Schaltkreis (220) zuführt.

5. Schaltvorrichtung nach einem der Ansprüche 1 bis 4, wobei der Schaltkreis Folgendes umfasst:
einen Schaltregler, der zu Folgendem konfiguriert ist: Regeln eines Relais (K1) zum Schalten der an die Endgerätvorrichtung angeschlossenen Quellgerätvorrichtung an die Zielgerätvorrichtung, wenn das Rückspannungsleitmodul (D5, D6, 210) die erste Spannung leitet; und
das Relais (K1), das dazu konfiguriert ist, die an die Endgerätvorrichtung angeschlossene Quellgerätvorrichtung an die Zielgerätvorrichtung zu schalten unter Regelung des Schaltreglers, wobei
das Ausgabeende des Rückspannungsleitmoduls (D5, D6, 210) an ein Eingabeende des Schaltreglers angeschlossen ist, wobei ein Ausgabeende des Schaltreglers an ein Eingabeende des Relais angeschlossen ist, und wobei ein Ausgabeende des Relais an die Zielgerätvorrichtung angeschlossen ist.

6. Schaltvorrichtung nach einem der Ansprüche 1 bis 5, wobei die Schaltvorrichtung ferner Folgendes umfasst:
eine Diodengruppe (D1, D2, D3, D4), die durch Anwenden einer ersten Klemme (1) und einer zweiten Klemme (2) an die Quellgerätvorrichtung angeschlossen ist, durch Anwenden einer dritten Klemme (3) und einer vierten Klemme (4) an den Schaltkreis angeschlossen ist, und dazu konfiguriert ist, eine Polarität einer dritten Spannung von der ersten Klemme (1) an die zweite Klemme (2) zu aktivieren, die von der Quellgerätvorrichtung ausgegeben wird, um eine erste Polarität zu sein.

7. Schaltvorrichtung nach Anspruch 6, wobei die Diodengruppe (D1, D2, D3, D4) Folgendes umfasst:
eine erste Diode (D1), wobei eine positive Elektrode der ersten Diode (D1) unter Anwendung der ersten Klemme (1) an die Quellgerätvorrichtung angeschlossen ist, und wobei eine negative Elektrode der ersten Diode (D1) unter Anwendung der dritten Klemme (3) an den Schaltkreis (220) angeschlossen ist, dazu konfiguriert, die positive dritte Spannung zu leiten, die von der ersten Klemme (1) zu der zweiten Klemme (2) geht; und
eine zweite Diode (D2), wobei eine negative Elektrode der zweiten Diode (D2) unter Anwendung der zweiten Klemme (2) an die Quellgerätvorrichtung angeschlossen ist, und wobei eine positive Elektrode der zweiten Diode (D2) unter Anwendung der vierten Klemme (4) an den Schaltkreis (220) angeschlossen ist, dazu konfiguriert, die positive dritte Spannung zu leiten, die von der ersten Klemme (1) zu der zweiten Klemme (2) geht.

8. Schaltvorrichtung nach Anspruch 6 oder 7, wobei die Diodengruppe (D1, D2, D3, D4) ferner Folgendes umfasst:
eine dritte Diode (D3), wobei eine negative Elektrode der dritten Diode (D3) unter Anwendung der ersten Klemme (1) an die Quellgerätvorrichtung angeschlossen ist, und wobei eine positive Elektrode der dritten Diode (D3) unter Anwendung der vierten Klemme (4) an den Schaltkreis (220) angeschlossen ist, dazu konfiguriert, die rückwärtsgehende dritte Spannung zu leiten, die von der ersten Klemme (1) zu der zweiten Klemme (2) geht; und
eine vierte Diode (D4), wobei eine positive Elektrode der vierten Diode (D4) unter Anwendung der zweiten Klemme (2) an die Quellgerätvorrichtung angeschlossen ist, und wobei eine negative Elektrode der vierten Diode (D4) unter Anwendung der dritten Klemme (3) an den Schaltkreis (220) angeschlossen ist, dazu konfiguriert, die rückwärtsgehende dritte Spannung zu leiten, die von der ersten Klemme (1) zu der zweiten Klemme (2) geht.

9. Schaltvorrichtung nach einem der Ansprüche 6 bis 8, wobei die Quellgerätvorrichtung einen Plain Old Telephone Service (POTS) und einen Asymmetrie Digital Subscriber Line Service (ADSL-Service, 710) unterstützt, und
wobei die Schaltvorrichtung ferner Folgendes umfasst:
einen ersten Tiefpassfilter (V2), der zwischen der Diodengruppe (D1, D2, D3, D4) und der Quellgerätvorrichtung angeschlossen und dazu konfiguriert ist, ein Signal des POTS zu leiten; und
einen Hochpassfilter (V1), der zwischen der Quellgerätvorrichtung (710) und dem Schaltkreis (220) angeschlossen und dazu konfiguriert ist, den ADSL-Service zu leiten.

10. Schaltvorrichtung nach einem der Ansprüche 6 bis 9, wobei die Schaltvorrichtung ferner Folgendes umfasst:
eine Anpassungsladung, die zwischen der Diodengruppe (D1, D2, D3, D4) und dem Schaltkreis (220) angeschlossen und dazu konfiguriert ist, ein Rufsignal des POTS anzupassen, bevor das Rückspannungsleitmodul (210) die erste Spannung leitet.

11. Schaltvorrichtung nach einem der Ansprüche 6 bis 10, wobei die Schaltvorrichtung (200) ferner ein Rückleistungszuführmodul umfasst, und wobei das Rückleistungszuführmodul unter Anwendung einer fünften Klemme (5) und einer sechsten Klemme (6) an das Rückspannungsleitmodul (210) angeschlossen ist;
wobei das Rückleistungszuführmodul zu Folgendem konfiguriert ist:
Aktivieren einer Polarität der ersten Spannung von der fünften Klemme (5) bis zur sechsten Klemme als zweite Polarität; und
Ausgeben der ersten Spannung der zweiten Polarität an das Rückspannungsleitmodul (210), wobei die zweite Polarität der ersten Polarität gegenüberliegt; und
wobei das Rückspannungsleitmodul ferner dazu konfiguriert ist, die erste Spannung der zweiten Polarität vor dem Leiten der ersten Spannung zu empfangen.

12. Schaltvorrichtung nach Anspruch 11, wobei das Rückspannungsleitmodul eine fünfte Diode umfasst, und
wobei die fünfte Diode dazu konfiguriert ist, die erste Spannung rückwärts zu leiten, wenn die zweite Polarität negativ ist, wobei eine negative Elektrode der fünften Diode unter Anwendung der fünften Klemme (5) an das Rückleistungszuführmodul angeschlossen ist, und wobei eine positive Elektrode der fünften Diode an den Schaltkreis angeschlossen ist, oder
wobei die fünfte Diode dazu konfiguriert ist, die erste Spannung vorwärts zu leiten, wenn die zweite Polarität positiv ist, wobei eine positive Elektrode der fünften Diode unter Anwendung der fünften Klemme (5) an das Rückleistungszuführmodul angeschlossen ist, und wobei eine negative Elektrode der fünften Diode an den Schaltkreis angeschlossen ist.

13. Schaltvorrichtung nach Anspruch 11 oder 12, wobei das Rückleistungszuführmodul Folgendes umfasst:
einen Spannungs-/Stromdetektor, der zu Folgendem konfiguriert ist: Detektieren der ersten Polarität der ersten Spannung von der fünften Klemme (5) zu der sechsten Klemme, und Schicken der ersten Polarität an einen Ausgangsregler der ersten Spannung; und
den Ausgangsregler der ersten Spannung, der zu Folgendem konfiguriert ist: Empfangen der ersten Polarität, und Regeln der Ausgabe der ersten Spannung der zweiten Polarität auf Grundlage der ersten Polarität.

14. Schaltvorrichtung nach Anspruch 11 oder 12, wobei das Rückleistungszuführmodul ferner Folgendes umfasst:
einen ersten Anschluss, einen zweiten Anschluss, einen dritten Anschluss und eine Rückleistungszuführeinrichtung, wobei der erste Anschluss zwischen der Rückleistungszuführeinrichtung und dem dritten Anschluss angeschlossen ist, wobei der dritte Anschluss zwischen dem ersten Anschluss und dem Rückspannungsleitmodul angeschlossen ist, wobei der zweite Anschluss an die Rückleistungszuführeinrichtung angeschlossen ist, und wobei eine Anschlussrichtung des ersten Anschlusses einer Anschlussrichtung des zweiten Anschlusses gegenüberliegt; und
wobei der erste Anschluss von dem dritten Anschluss getrennt ist, wenn die erste Polarität gleich der zweiten Polarität ist, und wobei der zweite Anschluss an den dritten Anschluss angeschlossen ist.

15. Schaltvorrichtung nach Anspruch 4 oder 5, wobei ein Unterschied zwischen einem Spannungswert der ersten Spannung und einem Spannungswert einer dritten Spannung größer ist als ein voreingestellter Schwellenwert, und wobei der Spannungswert der ersten Spannung größer ist als der Spannungswert der dritten Spannung.

## Revendications

1. Dispositif de commutation (200), dans lequel le dispositif de commutation comprend :
un module de conduction de tension inverse (210), configuré pour conduire une première tension fournie par un dispositif terminal ; et
un circuit de commutation (220), configuré pour commuter, en utilisant la première tension conduite par le module de conduction de tension inverse (210), un dispositif connecté au dispositif terminal (130) depuis un dispositif source (110) jusqu'à un dispositif cible (120), de sorte que le dispositif terminal (130) alimente en puissance de manière inverse le dispositif cible (120), dans lequel le dispositif source (110) alimente directement en puissance le dispositif terminal (130) avant que le circuit de commutation (220) ne commute le dispositif connecté au dispositif terminal (130) depuis le dispositif source (110) jusqu'au dispositif cible (120), dans lequel
une extrémité de sortie du module de conduction de tension inverse est connectée à une extrémité d'entrée du circuit de commutation, et une extrémité de sortie du circuit de commutation est connectée à une extrémité d'entrée du dispositif cible.

2. Dispositif de commutation selon la revendication 1, dans lequel le dispositif de commutation comprend en outre :
un module de conversion d'alimentation en puissance inverse, connecté entre le dispositif cible et le module de conduction de tension inverse (210), et configuré pour convertir, après que le module de conduction de tension inverse a conduit la première tension, la première tension en une deuxième tension exigée par le dispositif cible.

3. Dispositif de commutation selon la revendication 2, dans lequel le module de conversion d'alimentation en puissance inverse est connecté entre le circuit de commutation (220) et le module de conduction de tension inverse (210), et la deuxième tension alimente en énergie électrique le circuit de commutation (220) .

4. Dispositif de commutation selon la revendication 2, dans lequel le module de conversion d'alimentation en puissance inverse est connecté entre le circuit de commutation (220) et le dispositif cible (120), et la première tension alimente en énergie électrique le circuit de commutation (220).

5. Dispositif de commutation selon l'une quelconque des revendications 1 à 4, dans lequel le circuit de commutation comprend :
un dispositif de commande de commutation, configuré pour :
lorsque le module de conduction de tension inverse (D5, D6, 210) conduit la première tension, commander un relais (K1) pour commuter le dispositif source connecté au dispositif terminal jusqu'au dispositif cible ; et
le relais (K1), configuré pour commuter, sous la commande du dispositif de commande de commutation, le dispositif source connecté au dispositif terminal jusqu'au dispositif cible, dans lequel
l'extrémité de sortie du module de conduction de tension inverse (D5, D6, 210) est connectée à une extrémité d'entrée du dispositif de commande de commutation, une extrémité de sortie du dispositif de commande de commutation est connectée à une extrémité d'entrée du relais, et une extrémité de sortie du relais est connectée au dispositif cible.

6. Dispositif de commutation selon l'une quelconque des revendications 1 à 5, dans lequel le dispositif de commutation comprend en outre :
un groupe de diodes (D1, D2, D3, D4), connecté au dispositif source en utilisant une première borne (1) et une deuxième borne (2), connectées au circuit de commutation en utilisant une troisième borne (3) et une quatrième borne (4), et configuré pour permettre à une polarité d'une troisième tension de la première borne (1) à la deuxième borne (2) qui est sortie par le dispositif source d'être à une première polarité.

7. Dispositif de commutation selon la revendication 6, dans lequel le groupe de diodes (D1, D2, D3, D4) comprend :
une première diode (D1), dans lequel une électrode positive de la première diode (D1) est connectée au dispositif source en utilisant la première borne (1), et une électrode négative de la première diode (D1) est connectée au circuit de commutation (220) en utilisant la troisième borne (3), configurée pour conduire la troisième tension positive qui va de la première borne (1) à la deuxième borne (2) ; et
une deuxième diode (D2), dans lequel une électrode négative de la deuxième diode (D2) est connectée au dispositif source en utilisant la deuxième borne (2), et une électrode positive de la deuxième diode (D2) est connectée au circuit de commutation (220) en utilisant la quatrième borne (4), configurée pour conduire la troisième tension positive qui va de la première borne (1) à la deuxième borne (2).

8. Dispositif de commutation selon la revendication 6 ou 7, dans lequel le groupe de diodes (D1, D2, D3, D4) comprend en outre :
une troisième diode (D3), dans lequel une électrode négative de la troisième diode (D3) est connectée au dispositif source en utilisant la première borne (1), et une électrode positive de la troisième diode (D3) est connectée au circuit de commutation (220) en utilisant la quatrième borne (4), configurée pour conduire la troisième tension inverse qui va de la première borne (1) à la deuxième borne (2) ; et
une quatrième diode (D4), dans lequel une électrode positive de la quatrième diode (D4) est connectée au dispositif source en utilisant la deuxième borne (2), et une électrode négative de la quatrième diode (D4) est connectée au circuit de commutation (220) en utilisant la troisième borne (3), configurée pour conduire la troisième tension inverse qui va de la première borne (1) à la deuxième borne (2).

9. Dispositif de commutation selon l'une quelconque des revendications 6 à 8, dans lequel le dispositif source prend en charge un service téléphonique ordinaire, POTS, et un service de ligne d'abonné numérique à débit asymétrique, ADSL, (710), et
le dispositif de commutation comprend en outre :
un premier filtre passe-bas (V2), connecté entre le groupe de diodes (D1, D2, D3, D4) et le dispositif source, et configuré pour conduire un signal du POTS ; et
un filtre passe-haut (V1), connecté entre le dispositif source (710) et le circuit de commutation (220), et configuré pour conduire le service ADSL.

10. Dispositif de commutation selon l'une quelconque des revendications 6 à 9, dans lequel le dispositif de commutation comprend en outre :
une charge adaptée, connectée entre le groupe de diodes (D1, D2, D3, D4) et le circuit de commutation (220), et configurée pour ajuster un signal d'appel du POTS avant que le module de conduction de tension inverse (210) ne conduise la première tension.

11. Dispositif de commutation selon l'une quelconque des revendications 6 à 10, dans lequel le dispositif de commutation (200) comprend en outre un module d'alimentation en puissance inverse, et le module d'alimentation en puissance inverse est connecté au module de conduction de tension inverse (210) en utilisant une cinquième borne (5) et une sixième borne (6) ;
le module d'alimentation en puissance inverse est configuré pour :
permettre à une polarité de la première tension de la cinquième borne (5) à la sixième borne d'être à une seconde polarité ; et
sortir la première tension à la seconde polarité vers le module de conduction de tension inverse (210), dans lequel la seconde polarité est opposée à la première polarité ; et
le module de conduction de tension inverse est en outre configuré pour recevoir la première tension à la seconde polarité avant de conduire la première tension.

12. Dispositif de commutation selon la revendication 11, dans lequel le module de conduction de tension inverse comprend une cinquième diode, et
lorsque la seconde polarité est négative, la cinquième diode est configurée pour conduire de manière inverse la première tension, une électrode négative de la cinquième diode est connectée au module d'alimentation en puissance inverse en utilisant la cinquième borne (5), et une électrode positive de la cinquième diode est connectée au circuit de commutation, ou
lorsque la seconde polarité est positive, la cinquième diode est configurée pour conduire directement la première tension, une électrode positive de la cinquième diode est connectée au module d'alimentation en puissance inverse en utilisant la cinquième borne (5), et une électrode négative de la cinquième diode est connectée au circuit de commutation.

13. Dispositif de commutation selon la revendication 11 ou 12, dans lequel le module d'alimentation en puissance inverse comprend :
un détecteur de tension/courant, configuré pour : détecter la première polarité de la première tension qui va de la cinquième borne (5) à la sixième borne, et envoyer la première polarité à un premier dispositif de commande de sortie de tension ; et
le premier dispositif de commande de sortie de tension, configuré pour : recevoir la première polarité, et commander une sortie de la première tension à la seconde polarité sur la base de la première polarité.

14. Dispositif de commutation selon la revendication 11 ou 12, dans lequel le module d'alimentation en puissance inverse comprend en outre :
un premier connecteur, un deuxième connecteur, un troisième connecteur, et une alimentation en puissance inverse, dans lequel le premier connecteur est connecté entre l'alimentation en puissance inverse et le troisième connecteur, le troisième connecteur est connecté entre le premier connecteur et le module de conduction de tension inverse, le deuxième connecteur est connecté à l'alimentation en puissance inverse, et un sens de connexion du premier connecteur est opposé à un sens de connexion du deuxième connecteur ; et
lorsque la première polarité est la même que la seconde polarité, le premier connecteur est déconnecté du troisième connecteur, et le deuxième connecteur est connecté au troisième connecteur.

15. Dispositif de commutation selon la revendication 4 ou 5, dans lequel une différence entre une valeur de tension de la première tension et une valeur de tension d'une troisième tension est supérieure à un seuil prédéfini, et la valeur de tension de la première tension est supérieure à la valeur de tension de la troisième tension.
